# EUROPEAN PATENT SPECIFICATION

(11) **EP 4 715 458 B1**
(45) Date of publication and mention of the grant of the patent: **09.09.2026**
(21) Application number: 25196652.9
(22) Date of filing: 19.08.2025
(51) Int. Cl.: G02F 1/1335

(54) **DISPLAY DEVICE**
ANZEIGEVORRICHTUNG
DISPOSITIF D'AFFICHAGE

(30) Priority: 23.09.2024 KR 20240128114
(43) Date of publication of application: 25.03.2026
(73) Proprietor: LG Electronics Inc., Yeongdeungpo-gu Seoul 07336 (KR)
(72) Inventor: PARK, Jinsin, 07796 Seoul (KR); SHIM, Seunghwan, 07796 Seoul (KR); JUNG, Yongmin, 07796 Seoul (KR); YOON, Jihye, 07796 Seoul (KR); HWANG, Woongjoon, 07796 Seoul (KR)
(74) Representative: Vossius & Partner Patentanwälte Rechtsanwälte mbB

(56) References cited:
- CN-A- 108 878 622
- US-A1- 2019 324 327
- US-A1- 2024 126 119

## Description

### CROSS-REFERENCE TO RELATED APPLICATION

This application claims the priority benefit of Korean Patent Application No. 10-2024-0128114, filed on September 23, 2024.

### BACKGROUND OF THE INVENTION

### Field of the invention

The present disclosure relates to a display device.

### Description of the Related Art

As the information society develops, the demand for display devices is also increasing in various forms, and in response to this, various display devices such as Liquid Crystal Display Device (LCD), Plasma Display Panel (PDP), Electro luminescent Display (ELD), Vacuum Fluorescent Display (VFD), and Organic Light Emitting Diode (OLED) have been studied and used recently.

Among these, the LCD panel has a TFT substrate and a color substrate that are opposite to each other with a liquid crystal layer interposed therebetween, and may display images by using light provided from a backlight unit.

Recently, much research has been conducted on the structure of a substrate equipped with a light source such as LED. In addition, much research has been conducted to improve the image quality of the image displayed by a display panel. US 2024/126119 A1 discloses a display device with a backlight adapted for local dimming.

### SUMMARY OF THE INVENTION

It is an object of the present disclosure to solve the above and other problems.

Another object of the present disclosure may be to provide a structure capable of improving image quality by implementing a large number of local dimming blocks.

Another object of the present disclosure may be to provide a structure capable of improving the contrast ratio of an image and minimizing the halo phenomenon of an image, as each of a plurality of light sources provided in one optical package forms a local dimming block.

Another object of the present disclosure may be to provide a display device capable of reducing manufacturing costs by providing a larger number of local dimming blocks than the number of optical packages.

Another object of the present disclosure may be to provide a structure capable of minimizing the overlap of light distribution coverages of light sources in an optical package.

Another object of the present disclosure may be to provide a structure capable of minimizing the overlap of light distribution coverages of light sources by a lens covering an optical package.

Another object of the present disclosure may be to provide various examples of the number or arrangement of light sources in an optical package.

Another object of the present disclosure may be to provide a structure that differentiates the brightness or size of light sources in an optical package.

Another object of the present disclosure may be to provide various examples of the shape of a lens covering an optical package.

Another object of the present disclosure may be to provide a method of individually controlling the brightness of the light sources of an optical package.

The present invention is directed to a display device, as defined in appended claim 1, which includes: a display panel; and a backlight unit providing light to the display panel, wherein the backlight unit may include: a substrate; a plurality of optical packages located on the substrate; and a lens covering the optical package, wherein the optical package may include: a first light source on the substrate; a second light source adjacent to the first light source; and a partition wall between the first light source and the second light source, wherein in a first mode of the optical package, both the first light source and the second light source may be turned on, and a brightness of the first light source and a brightness of the second light source are controlled, wherein in a second mode of the optical package, the first light source is turned on, and a brightness of the first light source is controlled, but the second light source is turned off, wherein in a third mode of the optical package, the second light source is turned on, and a brightness of the second light source is controlled, but the first light source is turned off.

### BRIEF DESCRIPTION OF THE DRAWINGS

The above and other objects, features and advantages of the present invention will be more apparent from the following detailed description in conjunction with the accompanying drawings, in which:

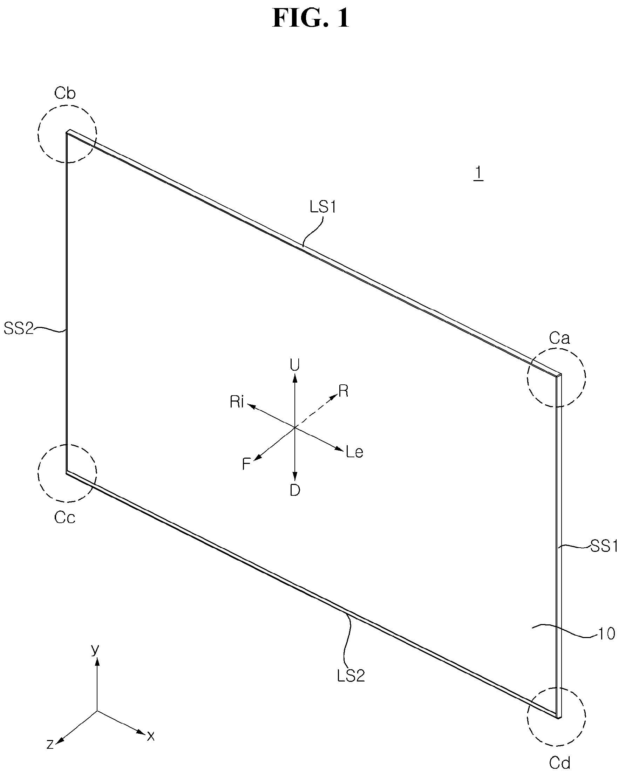

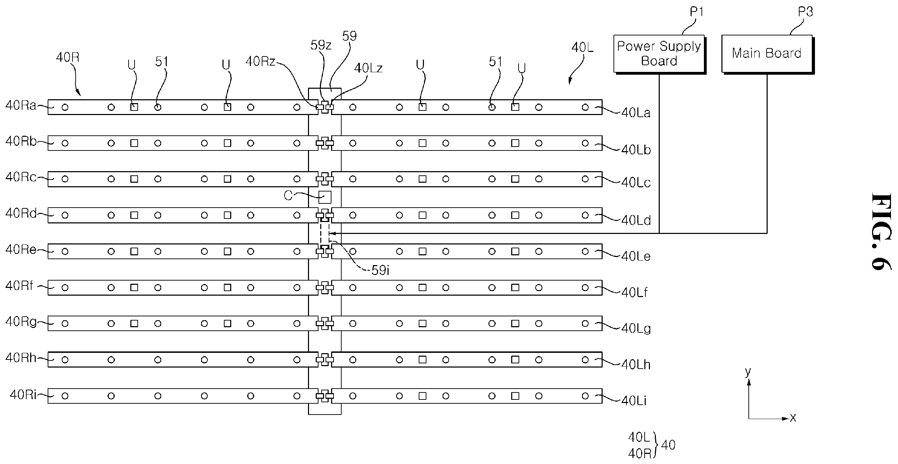

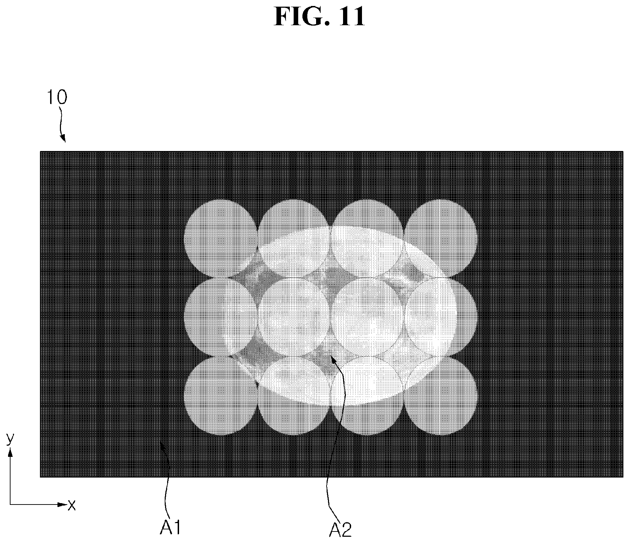

FIGS. 1 to 38 are diagrams illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings, as far as these fall under the scope of the appended claims.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

The direction indications of up U, down D, left Le, right Ri, front F, and rear R shown in the drawings are only for the convenience of explanation, and the technical concepts disclosed in this specification are not limited thereby.

Referring to FIG. 1, a display device 1 includes a display panel 10. The display panel 10 may display an image.

The display device 1 may include a first long side LS1, a second long side LS2 facing the first long side LS1, a first short side SS1 adjacent to the first long side LS1 and the second long side LS2, and a second short side SS2 facing the first short side SS1. Meanwhile, for convenience of explanation, it is illustrated that the lengths of the first and second long sides LS1 and LS2 are longer than the lengths of the first and second short sides SS1 and SS2, but it may be possible that the lengths of the first and second long sides LS1 and LS2 are approximately the same as the lengths of the first and second short sides SS1 and SS2.

The direction parallel to the long sides LS1 and LS2 of the display device 1 may be referred to as a left-right direction. The side of the first short side SS1 may be referred to as a left (Le, x), and the side of the second short side SS2 may be referred to as a right Ri.

The direction parallel to the short sides SS1 and SS2 of the display device 1 may be referred to as an up-down direction. The side of the first long side LS1 may be referred to as an upper side (U, y), and the side of the second long side LS2 may be referred to as a lower side D.

The direction perpendicular to the long sides LS1 and LS2 and short sides SS1 and SS2 of the display device 1 may be referred to as a front-rear direction. The direction in which the display panel 10 displays an image may be referred to as a front (F, z), and the opposite direction may be referred to as a rear R.

The first long side LS1, the second long side LS2, the first short side SS1, and the second short side SS2 may be referred to as an edge of the display device 1. In addition, a point where the first long side LS1, the second long side LS2, the first short side SS1, and the second short side SS2 meet each other may be referred to as a corner. A point where the first short side SS1 and the first long side LS1 meet may be referred to as a first comer Ca. A point where the first long side LS1 and the second short side SS2 meet may be referred to as a second corner Cb. A point where the second short side SS2 and the second long side LS2 meet may be referred to as a third corner Cc. A point where the second long side LS2 and the first short side SS1 meet may be referred to as a fourth corner Cd.

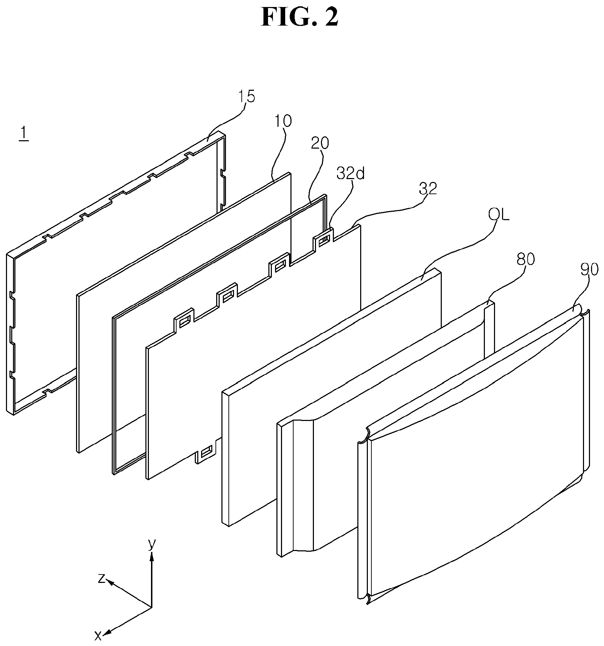

Referring to FIG. 2, the display device 1 includes a display panel 10, a case top 15, a guide panel 20, a backlight unit OL 32, a frame 80, and a back cover 90.

The display panel 10 may form the front surface of the display device 1 and may display an image. The display panel 10 may display an image as a plurality of pixels output RGB Red, Green or Blue for each pixel in accordance with timing. The display panel 10 may be divided into an active area where an image is displayed and a de-active area where an image is not displayed. The display panel 10 may include a front substrate and a rear substrate that are opposite to each other with a liquid crystal layer interposed therebetween. The display panel 10 may be referred to as an Liquid Crystal Display (LCD) panel 10.

The front substrate may include a plurality of pixels composed of red, green, and blue sub-pixels. The front substrate may output light corresponding to the color of red, green, or blue according to a control signal.

The rear substrate may include switching elements. The rear substrate may switch a pixel electrode. For example, the pixel electrode may change the molecular arrangement of the liquid crystal layer according to a control signal input from the outside. The liquid crystal layer may include liquid crystal molecules. The arrangement of the liquid crystal molecules may change in response to the voltage difference generated between a pixel electrode and a common electrode. The liquid crystal layer may transmit light provided from the backlight unit OL 32 to the front substrate or block the light.

The case top 15 may extend along the circumference of the display panel 10, and may cover the side surface of the display panel 10. The guide panel 20 may extend along the circumference of the display panel 10. The guide panel 20 may be arranged between the display panel 10 and the case top 15.

The backlight unit OL 32 is located at the rear of the display panel 10. The backlight unit OL 32 includes light sources. The backlight unit OL 32 may be coupled to the frame 80 at the front of the frame 80. The backlight unit OL 32 may be driven by a full driving method or a partial driving method such as local dimming and impulsive. The backlight unit OL 32 may include an optical sheet 32 and an optical layer OL.

The optical sheet 32 may evenly transmit light from a light source to the display panel 10. The optical sheet 32 may be composed of multiple layers. For example, the optical sheet 32 may include a prism sheet or a diffusion sheet. Meanwhile, the coupling portion 32d of the optical sheet 32 may be coupled to the frame 80.

The frame 80 may be located at the rear of the backlight unit OL 32, and may support the components of the display device 1. For example, a backlight unit OL 32, a Printed Circuit Board (PCB) on which multiple electronic components are located, and the like may be coupled to the frame 80. The frame 80 may include a metal material such as an aluminum alloy. The frame 80 may be referred to as a main frame 80, a module cover 80, or a cover bottom 80.

The back cover 90 may cover the rear of the frame 80. The back cover 90 may be coupled to the frame 80. For example, the back cover 90 may be an injection-molded resin material. For another example, the back cover 90 may include a metal material.

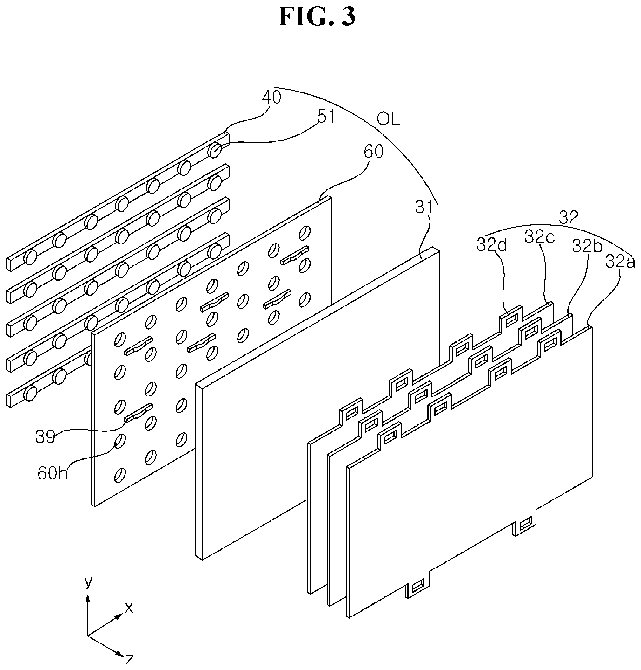

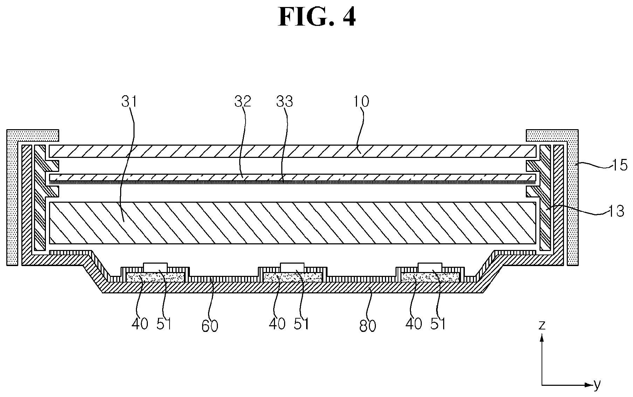

Referring to FIGS. 3 and 4, the optical layer OL includes a substrate 40, a plurality of optical packages 51, a reflective sheet 60, and a diffusion plate 31. The optical sheet 32 may be located in front of the optical layer OL.

The substrate 40 may be provided in the form of a plurality of straps that extend in the left-right direction, and are spaced apart from each other in the up-down direction. Alternatively, the substrate 40 may be provided in the form of a plurality of straps that extend in the up-down direction, and are spaced apart from each other in the left-right direction. Alternatively, the substrate 40 may have various shapes such as a plate, a fork, or a sawtooth. A plurality of optical packages 51 are mounted on the substrate 40. An electrode pattern may be formed on the substrate 40 to connect an adapter and the optical package 51. For example, the electrode pattern may be a carbon nanotube electrode pattern. The substrate 40 may be composed of at least one of polyethylene terephthalate (PET), glass, polycarbonate (PC), silicon, and aluminum Al. The substrate 40 may be a printed circuit board (PCB) on which a plurality of optical packages 51 are mounted.

The optical package 51 may be a package having light-emitting diode (LED) chips. The LED chip may be a mini LED chip. The optical package 51 may be referred to as an LED package 51 or an optical assembly 51. The optical package 51 may be composed of a colored LED that emits at least one color from among colors such as red, green, and blue, or a white LED. The colored LED may include at least one of a red LED, a green LED, and a blue LED. The optical package 51 may be referred to as a light package 51 or an LED package 51.

The reflective sheet 60 may be located in front of the substrate 40. At least one hole 60h may be formed to penetrate the reflective sheet 60, and the optical package 51 may be located in a hole 60h. The reflective sheet 60 may reflect the light provided from the optical package 51 or reflected from the diffusion plate 31 in a forward direction. For example, the reflective sheet 60 may include a metal having a high reflectivity, such as at least one of aluminum Al, silver Ag, gold Au, and titanium dioxide TiO2 and/or metal oxide.

In addition, an air gap may be formed between the reflective sheet 60 and the diffusion plate 31. The air gap may serve as a buffer, and light provided from the optical package 51 may be widely spread by the air gap. A supporter 39 may be located between the reflective sheet 60 and the diffusion plate 31, and may form the air gap.

The diffusion plate 31 may be located in front of the reflective sheet 60. The diffusion plate 31 may be located between the reflective sheet 60 and the optical sheet 32.

The optical sheet 32 may include at least one sheet. For example, the optical sheet 32 may include one or more prism sheets and/or one or more diffusion sheets. A plurality of sheets of the optical sheet 32 may be adhered to or in close contact with each other.

Specifically, the optical sheet 32 may be composed of a plurality of sheets having different functions. For example, the optical sheet 32 may include a first optical sheet 32a, a second optical sheet 32b, and a third optical sheet 32c. For example, the first optical sheet 32a may be a diffusion sheet, and the second optical sheet 32b and the third optical sheet 32c may be a prism sheet. The diffusion sheet may prevent the light emitted from the diffusion plate 31 from being partially concentrated, thereby making the distribution of light to be more uniform. The prism sheet may collect the light emitted from the diffusion plate 31 and provide the light to the display panel 10. Meanwhile, the number and/or locations of the diffusion sheet and the prism sheet may be changed.

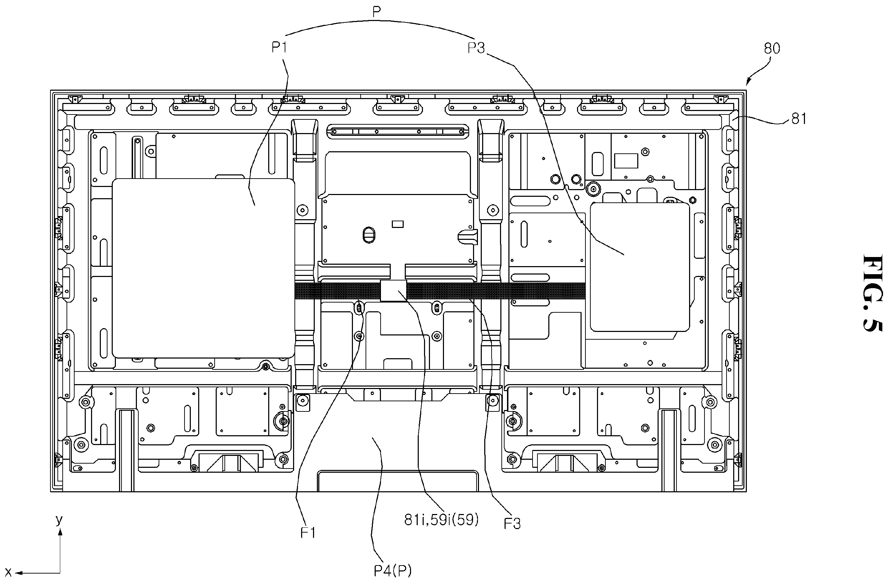

Referring to FIGS. 5 to 7, a board P may be mounted on a frame 80. A plurality of electronic components may be mounted on the board P. The board P may be a Printed Circuit Board (PCB), and may be electrically connected to electronic components of the display device. The boards P may be coupled to the rear of the frame 80.

A power supply board P1 may supply power to each component of the display device. A main board P3 may control each component of the display device. A timing controller board P4 may be connected to the main board P3 via a cable, and may provide an image signal to the display panel 10.

The substrate 40 may be coupled to the front surface of the frame 80. For example, the substrate 40 may have a bar shape. The substrate 40 may extend in a horizontal direction. Alternatively, the substrate 40 may extend vertically or diagonally. The plurality of substrates 40 may be spaced apart from each other in a direction intersecting with the length direction of the substrate 40. Each of the plurality of substrates 40 includes optical packages 51, and the optical packages 51 may be referred to as a light source array 51 or a Light Emitting Diode (LED) array 51.

An extension board 59 may extend in a direction intersecting with the substrates 40. The extension board 59 may extend in a vertical direction. For example, the substrates 40 may extend from one long side of the extension board 59 in a direction intersecting with the extension board 59 (e.g., in a horizontal direction). For example, the substrates 40 may include first substrates 40L and second substrates 40R that are opposite to each other with respect to the extension board 59. The first substrates 40L and the second substrates 40R may be arranged in alignment with each other or staggered in the width direction of the extension board 59.

Mounting connectors 59z may be mounted on the extension board 59. The mounting connectors 59z may be attached to the front surface of the extension board 59 through Surface Mount Technology (SMT). The mounting connectors 59z may be spaced apart from each other in the length direction of the extension board 59.

The first substrates 40La, 40Lb, 40Lc, 40Ld, 40Le, 40Lf, 40Lg, 40Lh, and 40Li may be adjacent to the left side of the extension board 59, and may be electrically connected to the mounting connectors 59z of the extension board 59 through first connectors 40Lz.

The second substrates 40Ra, 40Rb, 40Rc, 40Rd, 40Re, 40Rf, 40Rg, 40Rh, and 40Ri may be adjacent to the right side of the extension board 59, and may be electrically connected to the mounting connectors 59z of the extension board 59 through second connectors 40Rz.

The power supply board P1 may be electrically connected to a cable F1, and the cable F1 may be electrically connected to a connector 59i of the extension board 59 through a hole 81i of the frame 80. The main board P3 may be electrically connected to a cable F3, and the cable F3 may be electrically connected to the connector 59i of the extension board 59 through the hole 81i of the frame 80. The connector 59i may be provided on the rear surface of the extension board 59. The cables F1, F3 may be Flexible Flat Cables (FFCs). Accordingly, the extension board 59 may receive power and/or signal from the power supply board P1 and the main board P3.

The processor C may be mounted on the extension board 59. The processor C may be a Micro Controller Unit (MCU). The processor C may be referred to as a controller C. Driver Integrated Circuits (ICs) U may be mounted on the substrates 40. Each of the substrates 40 may have at least one driver IC (U). The processor C may convert (process) data related to image quality (e.g., brightness) of the optical packages 51 received from the main board P3 and provide the data to the driver ICs (U). The driver ICs (U) may adjust the brightness of the optical packages 51 based on the data received from the processor (C).

For example, the optical packages 51 may be arranged in a single row on each substrate 40. The optical packages 51 of each substrate 40 may form a local dimming blocks for every N optical packages 51. Here, N is a natural number greater than or equal to 1. For example, each of the plurality of optical packages 51 of the first substrate 40L may form a local dimming block, or two or more optical packages 51 of the plurality of optical packages 51 may be grouped to form a local dimming block. The driver ICs U may control the brightness of the optical packages 51 belonging to each local dimming block by controlling the amount of current flowing to the optical packages 51 or blocking the flow of current, thereby implementing a local dimming.

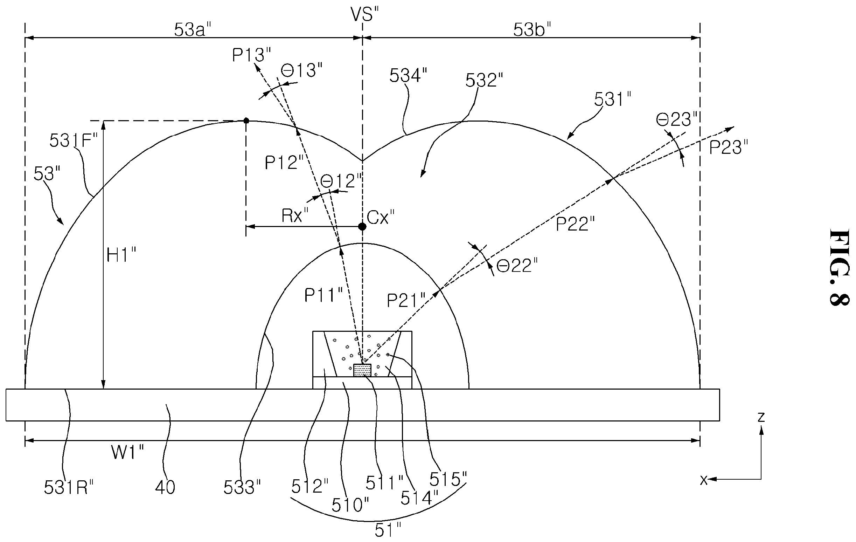

Referring to FIG. 8, an optical package 51" may include a lead frame 510", a light source 511", a wall 512", and an encapsulation 514". The encapsulation 514" may also be referred to as an encapsulant 514". The optical package 51" may also be referred to as an LED package 51" or an optical assembly 51". Meanwhile, the encapsulation 514" may be omitted.

The lead frame 510" may be located on the substrate 40, and may be electrically connected to the substrate 40. The lead frame 510" may be a die of the optical package 51". For example, the lead frame 510" may include a conductive material such as copper Cu.

The light source 511" may be a Light Emitting Diode Chip (LED chip) 511". The light source 511" may be mounted on a lead frame 510", and may be electrically connected to the lead frame 510". The light source 511" may be a chip having a rectangular parallelepiped shape, and five surfaces of the light source 511" excluding the bottom surface may emit light.

The wall 512" may be mounted on the lead frame 510", and may surround a side surface of the light source 511". The wall 512" may be referred to as a cup 512", a housing 512", or a mold 512". The encapsulation 514" may be filled in an accommodation portion of the wall 512", and may cover the light source 511". The encapsulation 514" may include a silicone or resin material.

A phosphor 515" may be located around the light source 511". For example, the liquid encapsulation 514" mixed with the phosphor 515" may cover the light source 511" and be cured. For example, the light of the light source 511" may be blue-series light, and the phosphor 515" may include yellow phosphor. The phosphor 515" may further include red phosphor. The yellow phosphor may be referred to as yellow Quantum Dot (QD), and the red phosphor may be referred to as red QD. In this case, the light of the light source 511" may excite the yellow phosphor and the red phosphor. The yellow and red series light emitted from the phosphor 515" of the encapsulation 514" may be mixed with the blue series light of the light source 511" that passes through the encapsulation 514" without being absorbed or reflected by the phosphor 515". Meanwhile, the phosphor 515" may be omitted.

Accordingly, the light source 511" of the optical package 51" may provide light.

A lens 53" covers the optical package 51". The lens 53" may be coupled or attached to the substrate 40. The lens 53" may include a plastic or resin material. For example, the lens 53" may include a Polymethyl Methacrylate (PMMA) material. The lens 53" viewed from the front may have a circular or oval shape. The cross-section of the lens 53" may have an overall shape of two humps of bactrian camel. The lens 53" may include a dome part 531", a rear groove 533", and a front groove 534". The rear groove 533" and the front groove 534" may be formed in the central portion of the lens 53". The portion of the lens 53" where the rear groove 533" and the front groove 534" are formed may be referred to as a central part 532".

The dome part 531" may have a convex dome shape. The front surface 531F" of the dome part 531" may be curved, and the rear surface 531R" of the dome part 531" may be a plane. The dome part 531" may form an outer circle of the lens 53" when viewed from the front. The width W1" of the dome part 531" may be larger than the height H1" of the dome part 531". The width W1" may be equal to the diameter of the lens 53", and a portion of the dome part 531" spaced apart from the center Cx" of the lens 53" by a certain distance Rx" may define the height H1". The width W1" and the height H1" may be the maximum width and maximum height of the lens 53".

The rear groove 533" may be recessed from the rear surface 531R" of the dome part 531". The rear groove 533" may be a concave groove with respect to the rear surface 531R". The rear groove 533" may be a cup-shaped groove.

The front groove 534" may be recessed from the front surface 531F" of the dome part 531". The front groove 534" may be a concave groove with respect to the front surface 531F". The front groove 534" may be a funnel-shaped groove.

A vertical surface VS" may pass through the center Cx" of the lens 53", and may be a plane intersecting with the lens 53". The center Cx" of the lens 53" may be formed in the central part 532", and the vertical surface VS" may be a yz plane. A first part 53a" and a second part 53b" of the lens 53" may be symmetrical with respect to the vertical surface VS". In other words, each of the first part 53a" and the second part 53b" may correspond to half of the lens 53".

The optical package 51" may be located in the rear groove 533". The center of the light source 511" may be aligned with the vertical surface VS" passing through the center Cx" of the lens 53". The light of the light source 511" may pass through the rear groove 533". The surface of the rear groove 533" may be referred to as a light-incident surface.

Accordingly, the light of the light source 511" incident on the concave rear groove 533" may be refracted at an angle (theta 12", theta 22") larger than the incident angle. That is, the light incident on the rear groove 533" may be refracted in a direction (see P12", P22" of FIG. 8) in which the angle increases compared to the incident light path (see P11", P21" of FIG. 8).

The light incident on the rear groove 533" may pass through the front surface 531F" of the dome part 531" and/or the front groove 534" via the inside of the lens 53". The front surface 531F" and the front groove 534" may be referred to as light-emitting surfaces 531F", 534".

Accordingly, the light from the light source 511" passing through the concave front groove 534" may be refracted at an angle (theta 13") larger than the entrance angle. That is, the light emitted from the front groove 534" may be refracted in a direction (see P13" of FIG. 8) in which the angle increases compared to the existing light path (see P12" of FIG. 8). In addition, the light of the light source 511" passing through the front surface 531F" of the dome part 531" may be refracted at an angle (theta 23") larger than the entrance angle. That is, the light emitted from the front surface 531F" may be refracted in a direction (see P23" of FIG. 8) in which the angle increases compared to the existing light path (see P22" of FIG. 8). As such, the light of the light source 511" may be spread over a wide directional angle by the lens 53".

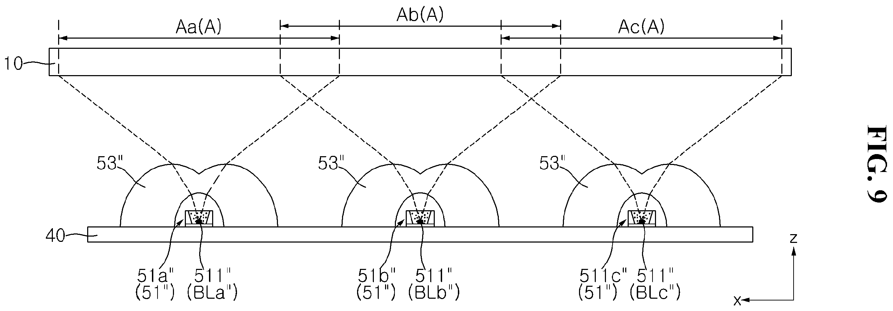

Referring to FIGS. 9 to 11, a plurality of optical packages 51" may provide light to the display panel 10. The diffusion plate 31 (see FIG. 4) and the optical sheet 32 (see FIG. 4) may be located between the optical packages 51" and the display panel 10. Each of the plurality of lenses 53" may cover each of the plurality of optical packages 51", and the light of the optical package 51" may be refracted or reflected by the lens 53" and spread over a wide directional angle.

For example, each of the plurality of optical packages 51" may form a local dimming block BL". In other words, the brightness of each optical package 51" may be individually controlled. The local dimming blocks BL" may be arranged in a matrix form corresponding to the arrangement of the optical packages 51". For example, the local dimming blocks BL" may be composed of ten rows (R1, R2, R3, R4, R5, R6, R7, R8, R9, R10) and sixteen columns (C1, C2, C3, C4, C5, C6, C7, C8, C9, C10, C11, C12, C13, C14, C15, C16).

The display panel 10 may be divided into a plurality of areas A corresponding to the local dimming blocks BL". The light of each local dimming block BL" may be directed to each area A. In other words, in order to output an image to a specific area of the display panel 10, a specific local dimming block may provide light to the specific area. Each area A may be composed of multiple pixels of the display panel 10.

For example, the light from the light source 511" of a first optical package 51a" forming a first local dimming block BLa" may be provided to a first area Aa of the display panel 10. The light from the light source 511" of a second optical package 51 b" forming a second local dimming block BLb" may be provided to a second area Ab of the display panel 10. The light from the light source 511" of a third optical package 51c" forming a third local dimming block BLc" may be provided to a third area Ac of the display panel 10.

For example, the display panel 10 may output an image of a bright moon A2 located in the center of a black background A1.

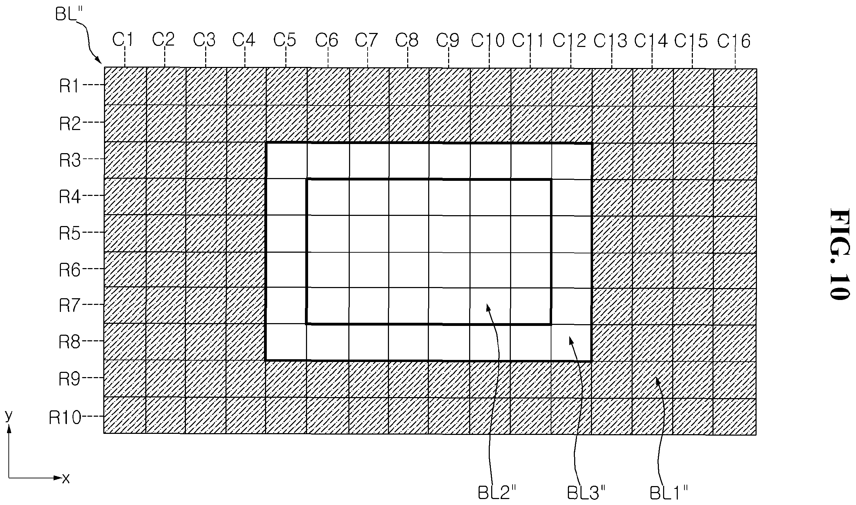

The first local dimming blocks BL1" (see FIG. 10) may correspond to a portion of a black background A1 of the display panel 10, and the optical packages 51" of the first local dimming blocks BL1" may not be driven and thus may not emit light.

The second local dimming blocks BL2" (see FIG. 10) may correspond to most of a bright moon A2 of the display panel 10, and the optical packages 51" of the second local dimming blocks BL2" may be driven and may provide light to most of the bright moon A2 of the display panel 10. However, the light of the second local dimming blocks BL2" may not be provided to the edge portion of the bright moon A2 of the display panel 10.

The third local dimming blocks BL3" (see FIG. 10) may correspond to the edge portion of the bright moon A2 of the display panel 10, and the optical packages 51" of the third local dimming blocks BL3" may be driven to provide light to the edge portion of the bright moon A2 of the display panel 10.

However, the light of the third local dimming blocks BL3" may also be provided to the black background A1 portion of the display panel 10, and as a result, the phenomenon of light spreading around the bright moon A2, i.e., halo phenomenon, may

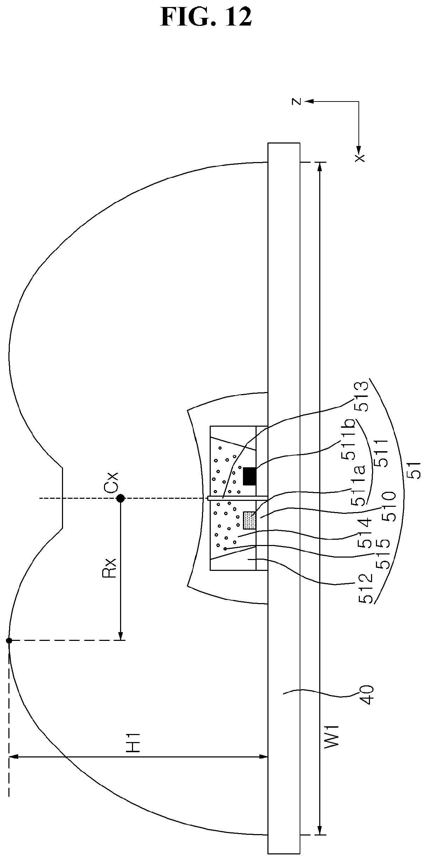

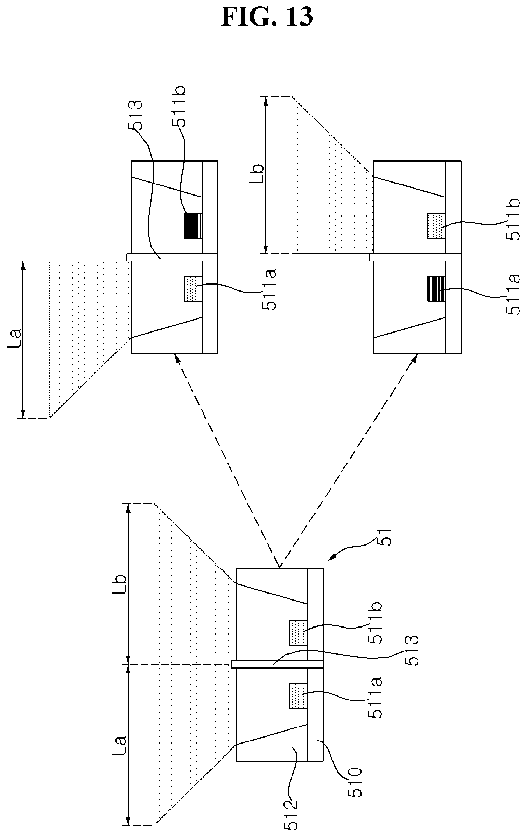

Referring to FIGS. 12 and 13, the optical package 51 includes a lead frame 510, light sources 511, a wall 512, a partition wall 513, and an encapsulation 514. The encapsulation 514 may also be referred to as an encapsulant 514'. The encapsulation 514 may be omitted.

The lead frame 510 may be located on the substrate 40, and may be electrically connected to the substrate 40. For example, the lead frame 510 may include a conductive material such as copper Cu. The light sources 511 may be Light Emitting Diode Chips (LED chips) 511. The light sources 511 may be mounted on the lead frame 510, and may be electrically connected to the lead frame 510. A first light source 511a and a second light source 511b may be spaced apart from each other. The light source 511 may be a chip having a rectangular parallelepiped shape, and five surfaces of the light source 511 excluding the bottom surface may emit light. The sizes of the light sources 511 may be the same.

The wall 512 may be mounted on the lead frame 510, and may surround the side surface of the light sources 511. The wall 512 may be referred to as a cup 512, a housing 512, or a mold 512. The partition wall 513 is located between the first light source 511a and the second light source 511b. The partition wall 513 may block the light of the first light source 511a from proceeding to an area in front of the second light source 511b, and may block the light of the second light source 511b from proceeding to an area in front of the first light source 511a. The encapsulation 514 may be filled in the accommodation portion of the wall 512, and may cover the light sources 511. The encapsulation 514 may include a silicone or resin material.

The phosphor 515 may be located around the light sources 511. For example, a liquid encapsulation 514 mixed with the phosphor 515 may cover the light source 511 and be cured. For example, the light of the light source 511 may be blue-series light, and the phosphor 515 may include a yellow phosphor. The phosphor 515 may further include a red phosphor. The yellow phosphor may be referred to as a yellow quantum dot (QD), and the red phosphor may be referred to as a red QD. In this case, the light of the light source 511 may excite the yellow phosphor and the red phosphor. The yellow-series and red-series light emitted from the phosphor 515 of the encapsulation 514 may not be absorbed or reflected by the phosphor 515 but may be mixed with the blue-series light of the light source 511 passing through the encapsulation 514. Meanwhile, the phosphor 515 may be omitted.

Accordingly, the first and second light sources 511a, 511b of the optical package 51 may provide light. At this time, the area in front of the optical package 51 may include a first area La where the light of the first light source 511a reaches and a second area Lb where the light of the second light source 511b reaches. Alternatively, the first light source 511a may be driven but the second light source 511b may not be driven, and the optical package 51 may form the first area La. Alternatively, the second light source 511b may be driven but the first light source 511a may not be driven, and the optical package 51 may form the second area La.

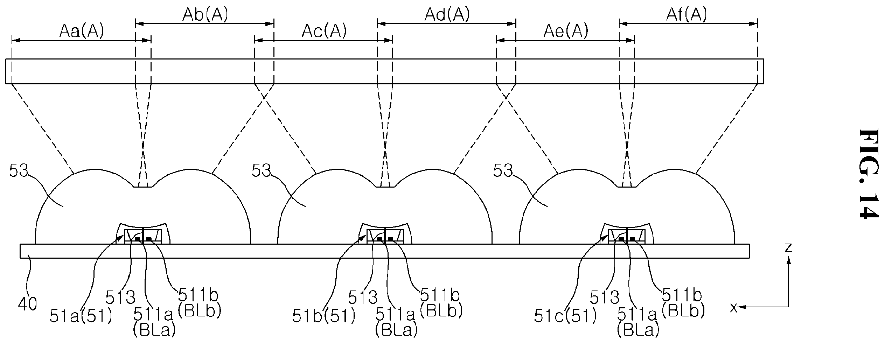

Referring to FIGS. 14 to 16, a plurality of optical packages 51 may provide light to the display panel 10. The diffusion plate 31 (see FIG. 4) and the optical sheet 32 (see FIG. 4) may be located between the optical packages 51 and the display panel 10. Each of the plurality of lenses 53 may cover each of the plurality of optical packages 51, and the light from the optical package 51 may be refracted or reflected by a lens 53 and spread over a wide directional angle.

For example, each of the light sources 511 of each optical package 51 may form a local dimming block BL. In other words, the brightness of each light source 511 of each optical package 51 may be individually controlled. The local dimming blocks BL may be arranged in a matrix form corresponding to the arrangement of the light sources 511 of the optical packages 51. For example, the local dimming block BL may be composed of 10 rows (R1, R2, R3, R4, R5, R6, R7, R8, R9, R10) and 32 columns (C1, C2, C3, C4, C5, C6, C7, C8, C9, C10, C11, C12, C13, C14, C15, C16, C17, C18, C19, C20, C21, C22, C23, C24, C25, C26, C27, C28, C29, C30, C31, C32). The optical package 51 includes two light sources 511 arranged in a horizontal direction, and may form two times more local dimming blocks BL than an optical package 51" including one light source 511".

The display panel 10 may be divided into a plurality of areas A corresponding to the local dimming blocks BL. The light of each local dimming block BL may be directed to each area A. In other words, in order to output an image to a specific area of the display panel 10, a specific local dimming block may provide light to the specific area. Each area A may be composed of multiple pixels of the display panel 10.

For example, the light of the first light source 511a of the first optical package 51a forming a first local dimming block BLa may be provided to the first area Aa of the display panel 10. The light of the second light source 511b of the first optical package 51a forming a second local dimming block BLb may be provided to the second area Ab of the display panel 10. The light of the first light source 511a of the second optical package 51b forming a third local dimming block BLc may be provided to the third area Ac of the display panel 10. The light of the second light source 511b of the second optical package 51b forming a fourth local dimming block BLd may be provided to a fourth area Ad of the display panel 10. The light of the first light source 511a of the third optical package 51c forming a fifth local dimming block BLe may be provided to a fifth area Ae of the display panel 10. The light of the second light source 511b of the third optical package 51c forming a sixth local dimming block BLf may be provided to a sixth area Af of the display panel 10.

For example, the display panel 10 may output an image of a bright moon A2 located in the center of the black background A1.

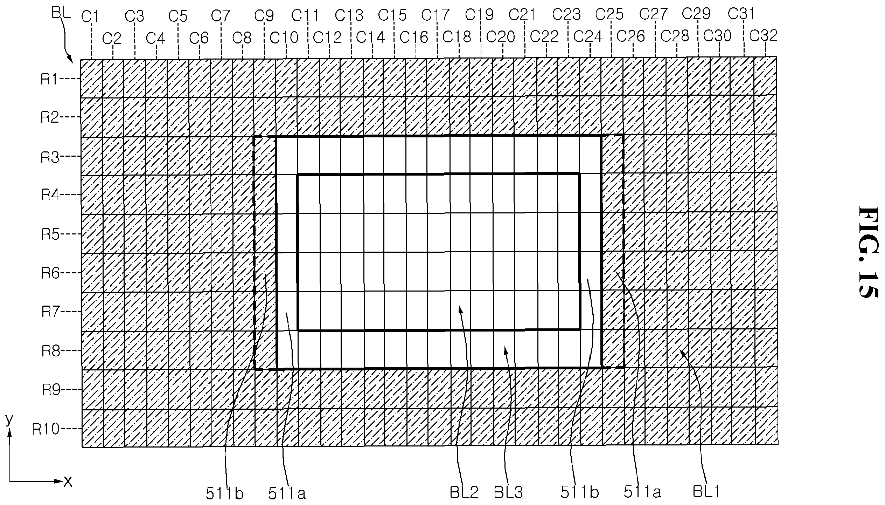

The first local dimming blocks BL1 (see FIG. 15) may correspond to a portion of the black background A1 of the display panel 10, and the optical packages 51 of the first local dimming blocks BL1 may not be driven and thus may not emit light.

The second local dimming blocks BL2 (see FIG. 15) may correspond to most of the bright moon A2 of the display panel 10, and the optical packages 51 of the second local dimming blocks BL2 may be driven and provide light to most of the bright moon A2 of the display panel 10. However, the light of the second local dimming blocks BL2 may not be provided to the edge portion of the bright moon A2 of the display panel 10.

The third local dimming blocks BL3 (see FIG. 10) may correspond to the edge portion of the bright moon A2 of the display panel 10, and the optical packages 51 of the third local dimming blocks BL3 may be driven to provide light to the edge portion of the bright moon A2 of the display panel 10. At this time, the third local dimming blocks BL3 located in the ninth and tenth columns C9, C10 may provide light by driving the first light sources 511a, and the second light sources 511b may not be driven. Here, the first light sources 511a may be light sources of the tenth column C10 facing the second local dimming blocks BL2. In addition, the third local dimming blocks BL3 located in 24th and 25th columns C24, C25 may provide light by driving the second light sources 511b, and the first light sources 511a may not be driven. Here, the second light sources 511b may be light sources of the 24th column C24 facing the second local dimming blocks BL2.

Accordingly, the light of the third local dimming block BL3 may be minimized from being provided to the black background A1 portion of the display panel 10, and as a result, the phenomenon of light spreading around the bright moon A2, i.e., the halo phenomenon, may be minimized.

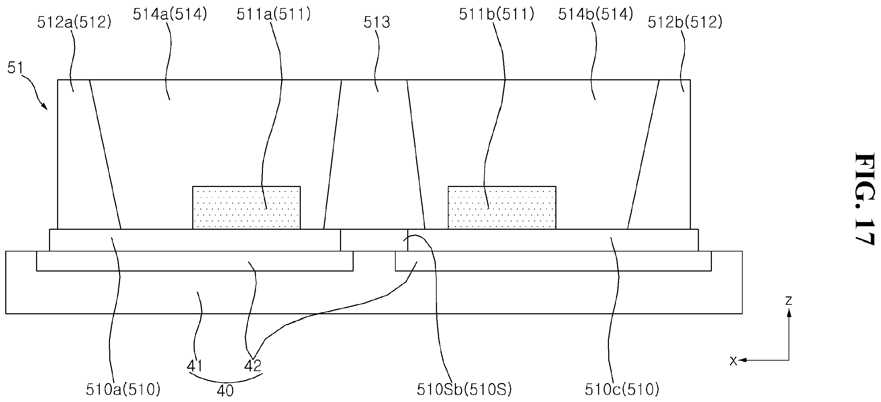

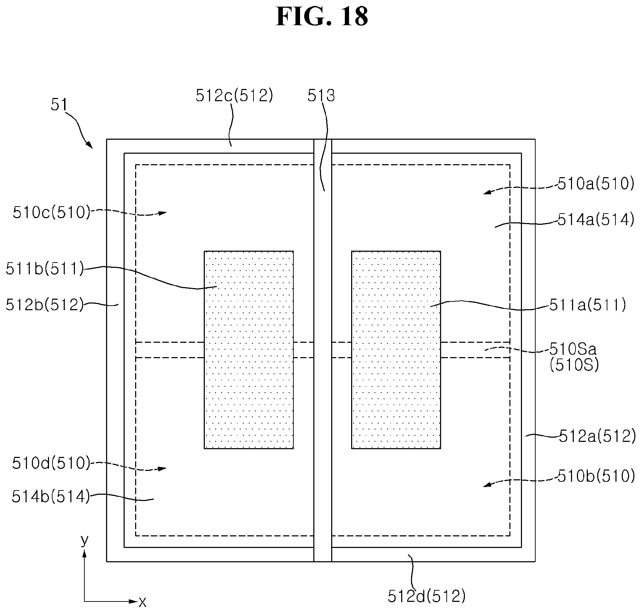

Referring to FIGS. 17 and 18, the substrate 40 may include a base 41 and a conductive layer 42. For example, the base 41 may include an aluminum Al material. For example, the conductive layer 42 may include a copper Cu material and may be formed on the surface of the base 41. The conductive layer 42 may be referred to as a circuit layer 42.

The optical package 51 may include a lead frame 510, a spacer 510S, light sources 511a, 511b, a wall 512, a partition wall 513, and an encapsulation 514. The encapsulation 514 may also be referred to as an encapsulant 514. The encapsulation 514 may be omitted. The optical package 51 may be a square or rectangular assembly.

The lead frame 510 may be located on the conductive layer 42 and may be electrically connected to the conductive layer 42. The lead frame 510 may be a die of the optical package 51. For example, the lead frame 510 may include a conductive material such as copper Cu. First to fourth lead frames 510a, 510b, 510c, 510d may be arranged in a 2X2 matrix form, and may be adjacent to each other but spaced apart from each other.

The spacer 510S may be fixed or formed on the substrate 40, and may be located between the first to fourth lead frames 510a, 510b, 510c, 510d. The horizontally long first spacer 510Sa may be located between a first lead frame 510a and a second lead frame 510b, and further, the first spacer 510Sa may be located between a third lead frame 510c and a fourth lead frame 510d. The vertically long second spacer 510Sb may be located between the first lead frame 510a and the third lead frame 510c, and further, the second spacer 510Sb may be located between the second lead frame 510b and the fourth lead frame 510d. The spacer 510S may include a resin material. For example, the spacer 510S may include a PolycyclohexyleneDimethylene Terephthalate (PCT) or Epoxy Molding Compound (EMC) material.

The first light source 511a may be mounted on the first and second lead frames 510a, 510b. One side of the first light source 511a may be electrically connected to the first lead frame 510a, and the other side of the first light source 511a may be electrically connected to the second lead frame 510b.

The second light source 511b may be mounted on the third and fourth lead frames 510c, 510d. One side of the second light source 511b may be electrically connected to the third lead frame 510c, and the other side of the second light source 511b may be electrically connected to the fourth lead frame 510d.

Accordingly, one optical package 51 includes two light sources 511a, 511b, and each of the two light sources 511a, 511b are individually controlled. For example, the light source 511 may be a chip having a rectangular shape. For example, the long side of the first light source 511a and the long side of the second light source 511b may face each other.

The wall 512 may be located on the lead frame 510. The wall 512 may be formed or fixed on the lead frame 510. The wall 512 may be arranged along the circumference of the lead frame 510. The wall 512 may surround the side surfaces of the light sources 511a, 511b. The wall 512 may be a rectangular wall. A first part 512a of the wall 512 may extend along the first lead frame 510a and the second lead frame 510b. A second part 512b of the wall 512 may extend along the third lead frame 510c and the fourth lead frame 510d. A third part 512c of the wall 512 may extend along the first lead frame 510a and the third lead frame 510c. A fourth part 512d of the wall 512 may extend along the second lead frame 510b and the fourth lead frame 510d. The wall 512 may include an opaque material. The wall 512 may include a resin material. For example, the wall 512 may include a PolycyclohexyleneDimethylene Terephthalate (PCT) or Epoxy Molding Compound (EMC) material.

The partition wall 513 is located between the first light source 511a and the second light source 511b. The partition wall 513 may extend along the second spacer 510Sb. The partition wall 513 may protrude from the second spacer 510Sb. The partition wall 513 and the second spacer 510Sb may be formed as one body. The partition wall 513 may include an opaque material. The partition wall 513 may include a resin material. For example, the partition wall 513 may include a PolycyclohexyleneDimethylene Terephthalate (PCT) or Epoxy Molding Compound (EMC) material.

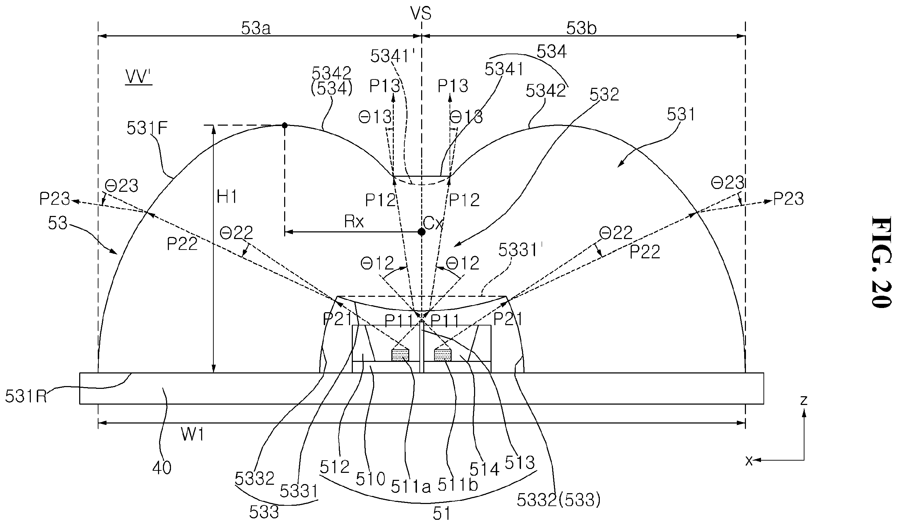

As described above and below, the light distribution of each of the first and second light sources 511a, 511b may be separated by the partition wall 513. A separator may be located on the vertical surface VS of the lens 53 described later with reference to FIG. 20, and may replace the partition wall 513 or separate the light distribution of each of the first and second light sources 511a, 511b together with the partition wall 513. The separator may include a reflective material. The separator may be a mirror.

A first encapsulation 514a may be filled between the partition wall 513 and the first part 512a of the wall 512, and may cover the first light source 511a. A portion of the third part 512c between the partition wall 513 and the first part 512a, a portion of the fourth part 512d between the partition wall 513 and the first part 512a, the first part 512a, and the partition wall 513 may form an accommodation space (accommodation portion) of the first encapsulation 514a. The first encapsulation 514a may include a light-transmitting material. The first encapsulation 514a may include a silicone or resin material. For example, a first phosphor 515a may be mixed into the first encapsulation 514a.

A second encapsulation 514b may be filled between the partition wall 513 and the second part 512b of the wall 512, and may cover the second light source 511b. A portion of the third part 512c between the partition wall 513 and the second part 512b, a portion of the fourth part 512d between the partition wall 513 and the second part 512b, the second part 512b, and the partition wall 513 may form an accommodation space (accommodation portion) of the second encapsulation 514b. The second encapsulation 514b may include a light-transmitting material. The second encapsulation 514b may include a silicone or resin material. For example, a second phosphor 515b may be mixed into the second encapsulation 514b.

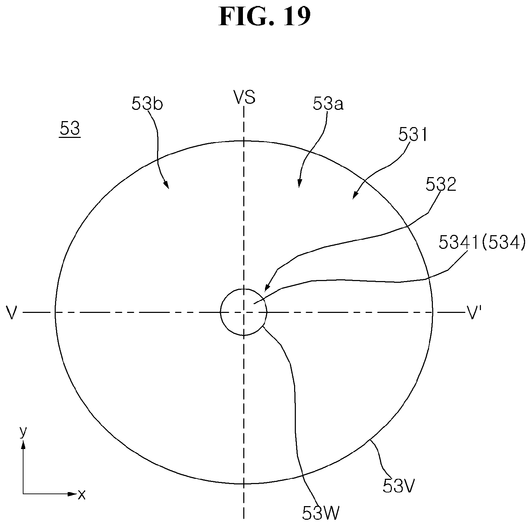

Referring to FIGS. 19 and 20, the lens 53 covers the optical package 51. The lens 53 may be coupled or attached to the substrate 40. The lens 53 may include a plastic or resin material. For example, the lens 53 may include a Polymethyl Methacrylate (PMMA) material. The lens 53 viewed from the front may have a circular or elliptical shape. A cross-section VV of the lens 53 may have an overall handset shape. The lens 53 may include a dome part 531, a rear groove 533, and a front groove 534. The rear groove 533 and the front groove 534 may be formed in a central portion of the lens 53. The portion of the lens 53 where the rear groove 533 and the front groove 534 are formed may be referred to as a central part 532.

The dome part 531 may have a convex dome shape. The front surface 531F of the dome part 531 may be curved, and the rear surface 531R of the dome part 531 may be a plane. The dome part 531 may form an outer circle 53V of the lens 53 as viewed from the front. The width W1 of the dome part 531 may be greater than the height H1 of the dome part 531. The width W1 may be equal to the diameter of the outer circle 53V, and a portion of the dome part 531 located at a certain distance Rx from the center Cx of the lens 53 may define a height H1. The width W1 and the height H1 may be the maximum width and maximum height of the lens 53.

The rear groove 533 may be recessed from the rear surface 531R of the dome part 531. The rear groove 533 may include a first surface 5331 and a second surface 5332. The first surface 5331 may form a bottom of the rear groove 533, and the second surface 5332 may extend along the circumference of the first surface 5331 to form a side wall of the rear groove 533. The second surface 5332 may be connected to the rear surface 531R of the dome part 531. The second surface 5332 may be a concave curved surface.

The front groove 534 may be recessed from the front surface 531F of the dome part 531. The front groove 534 may include a first surface 5341 and a second surface 5342. The first surface 5341 may form a bottom of the front groove 534, and the second surface 5342 may extend along the circumference of the first surface 5341 to form a side wall of the front groove 534. The second surface 5342 may be connected to the front surface 531F of the dome part 531. The second surface 5342 may be a convex curved surface. The first surface 5341 may form an inner circle 53W of the lens 53 viewed from the front.

The vertical surface VS may pass through the center Cx of the lens 53 and may be a plane intersecting with the lens 53. The center Cx of the lens 53 may be formed in the central part 532, and the vertical surface VS may be a yz plane. The first part 53a and the second part 53b of the lens 53 may be symmetrical with respect to the vertical surface VS. In other words, each of the first part 53a and the second part 53b may correspond to half of the lens 53.

The optical package 51 may be located in the rear groove 533. The optical package 51 may be spaced apart from the bottom of the rear groove 533, i.e., the first surface 5331. The distance between the light source 511 of the optical package 51 and the first surface 5331 may be about 1 mm. The light sources 511a, 511b may be directed toward the first surface 5331 of the rear groove 533. The light from the light sources 511a, 511b may pass through the first surface 5331 and the second surface 5332 of the rear groove 533. The first and second surfaces 5331, 5332 may be referred to as light-incident surfaces 5331, 5332. The partition wall 513 may be aligned with a vertical surface VS passing through the center Cx of the lens 53. The first surface 5331 may have a circular or elliptical shape, and the vertical surface VS may pass through the center of the first surface 5331. The first light source 511a may be directed toward a semicircular portion of the first surface 5331, and the second light source 511b may be directed toward the remaining semicircular portion of the first surface. For example, the first surface 5331 may be a convex curved surface toward the optical package 51. For another example, the first surface 5331 may be a plane 5331'.

Accordingly, the light from the light source 511 incident on the first surface (5331; 5331') may be refracted at an angle (theta 12) smaller than the incident angle. That is, the light incident on the first surface 5331; 5331' may be refracted in a direction in which the angle decreases (see P12 of FIG. 20) compared to the incident light path (see P11 of FIG. 20). The light from the light source 511 incident on the second surface 5332 formed as a concave curve may be refracted at an angle (theta 22) larger than the incident angle. That is, the light incident on the second surface 5332 may be refracted in a direction (see P22 of FIG. 20) in which the angle increases compared to the incident light path (see P21 of FIG. 20).

The light from the light sources 511a, 511b of the optical package 51 may pass through the front surface of the lens 53. The first surface 5341 and the second surface 5342 of the front groove 534, and the front surface 531F of the dome part 531 may form the front surface of the lens 53. The first and second surfaces 5341, 5342 and the front surface 531F may be referred to as light-emitting surfaces 5341, 5342, 531F. The first surface 5341 may have a circular or elliptical shape, and the vertical surface VS passing through the center Cx of the lens 53 may pass through the center of the first surface 5341. For example, the first surface 5341 may be a plane. For another example, the first surface 5341 may be a curved surface 5341' concave toward the first surface 5331.

Accordingly, the light of the light source 511 passing through the first surface (5341; 5341') may be refracted at an angle (theta 13) smaller than the entrance angle. That is, the light emitted from the first surface (5341; 5341') may be refracted in a direction (see P13 of FIG. 20) in which the angle decreases compared to the existing light path (see P12 of FIG. 20). The light of the light source 511 passing through the second surface 5342 or the front surface 531F may be refracted at an angle (theta 23) larger than the entrance angle. That is, the light emitted from the second surface 5342 or the front surface 531F may be refracted in a direction (see P23 of FIG. 20) in which the angle increases compared to the existing light path (see P22 of FIG. 20).

The light of the first light source 511a may pass through the first encapsulation 514a, and be guided by the wall 512 and the partition wall 513. In particular, the partition wall 513 aligned with the vertical surface VS of the lens 53 may be located in the path where the light of the first light source 511a located behind the first part 53a of the lens 53 is directed toward the second part 53b of the lens 53. That is, the partition wall 513 may reflect or refract the light of the first light source 511a to reduce the amount (proportion) of the light of the first light source 511a incident toward the second part 53b of the lens 53.

However, a portion of the light of the first light source 511a may be incident on the first surface 5331 of the second part 53b of the lens 53. At this time, the light incident on the first surface 5331 of the second part 53b may be refracted at an angle smaller than the incident angle, and may be refracted at an angle smaller than the refracted angle and emitted from the first surface 5341 of the second part 53b (see P11, P12, and P13 of FIG. 20).

Accordingly, the light of the first light source 511a that passed through the first part 53a of the lens 53 may be widely spread by the first part 53a to form a relatively wide light distribution area, whereas the light of the first light source 511a that passed through the second part 53b of the lens 53 may form a relatively narrow light distribution area.

The light of the second light source 511b may pass through the second encapsulation 514b, and be guided by the wall 512 and the partition wall 513. In particular, the partition wall 513 aligned with the vertical surface VS of the lens 53 may be located in the path where the light from the second light source 511b located behind the second part 53b of the lens 53 is directed toward the first part 53a of the lens 53. That is, the partition wall 513 may reflect or refract the light from the second light source 511b, thereby reducing the amount (proportion) of the light from the second light source 511b incident toward the first part 53a of the lens 53.

However, a portion of the light from the second light source 511b may also be incident on the first surface 5331 of the first part 53a. At this time, the light incident on the first surface 5331 of the first part 53a may be refracted at an angle smaller than the incident angle, and may be refracted at an angle smaller than the refracted angle and emitted from the first surface 5341 of the first part 53a (see P11, P12, and P13 of FIG. 20). Accordingly, the light of the second light source 511b that passed through the second part 53b of the lens 53 may be widely spread by the second part 53b to form a relatively wide light distribution area, whereas the light of the second light source 511b that passed through the first part 53a of the lens 53 may form a relatively narrow light distribution area.

A portion of the light of the first light source 511a and a portion of the light of the second light source 511b may pass through the first surface 5341 of the front groove 534. That is, on the first surface 5341, the light of the first light source 511a and the light of the second light source 511b may overlap. The overlapped light may pass through a pattern 5343.

For example, the pattern 5343 may be formed on the first surface 5341. The pattern 5343 may be protrusions or grooves. The protrusion of the pattern 5343 may have a shape of a prism or a cylinder. Alternatively, the pattern 5343 may be a powder or granule scattered or attached to the first surface 5341. The area around the first surface 5341 may appear hazy due to the powder or granule.

For example, the pattern 5343 may be adjacent to the first surface 5341. The pattern 5343 may be located inside the lens 53, and adjacent to the first surface 5341. Alternatively, the pattern 5343 may be located outside the lens 53, and may be located on the first surface 5341. The pattern 5343 may be a film or sheet located inside or outside the lens 53. The film or the sheet may have a shape (i.e., a circular shape) corresponding to the first surface 5341, and may have protrusions, grooves, a powder, or a granule. Alternatively, the pattern 5343 may be a powder or granule located inside the lens 53. The area around the first surface 5341 may appear hazy due to the powder or the granule.

Accordingly, the pattern 5343 may gently spread the light of the first and second light sources 511a, 511b passing through the pattern 5343, and as a result, the phenomenon in which the area near the first surface 5341 appears brighter than other areas due to the overlapping of light may be minimized. In addition, mura phenomenon may be minimized.

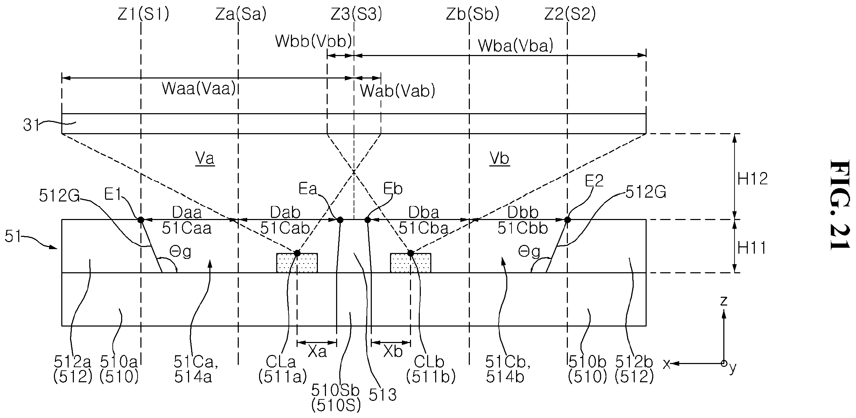

Referring to FIG. 21, the optical package 51 may include a first cavity 51Ca between the first part 512a of the partition wall 513 and the wall 512, and a second cavity 51Cb between the second part 512b of the partition wall 513 and the wall 512. The first light source 511a may be located in the first cavity 51Ca, and the first cavity 51Ca may be an accommodation space (accommodation portion) filled with the first encapsulation 514a. The second light source 511b may be located in the second cavity 51Cb, and the second cavity 51Cb may be an accommodation space (accommodation portion) filled with the second encapsulation 514b. The first cavity 51Ca may be referred to as a first light-emitting cavity 51Ca, and the second cavity 51Cb may be referred to as a second light-emitting cavity 51Cb. The first and second cavities 51Ca, 51Cb may be collectively referred to as light generating units 51Ca, 51Cb.

The light of the first and second light sources 511a, 511b may be provided to the diffusion plate 31. The light of the first and second light sources 511a, 511b may be refracted or reflected by the lens 53 (see FIG. 20). The central axis Z3 of the partition wall 513 of the optical package 51 may pass through the center of the partition wall 513 and may be parallel to the front-rear direction. The central axis Z3 may belong to a plane S3 (i.e., yz plane) passing through the center of the partition wall 513. In other words, the central axis Z3 is orthgonal to the substrate. A portion of the light of the first light source 511a may pass through the virtual plane S3 and be provided to a portion of the diffusion plate 31 in front of the second light source 511b. A portion of the light of the second light source 511b may pass through the virtual plane S3 and be provided to a portion of the diffusion plate 31 in front of the first light source 511a. A space between the optical package 51 and the diffusion plate 31 may be referred to as a light mixing portion.

The central axis Za of the first cavity 51Ca may pass through the center of the first cavity 51Ca, and may be parallel to the front-rear direction. The central axis Za may belong to a plane Sa (i.e., yz plane) passing through the center of the first cavity 51Ca. The first(inner) edge E1 of the front surface of the first part 512a of the wall 512 may face the first cavity 51Ca, and the first edge Ea of the front surface of the partition wall 513 may also face the first cavity 51Ca. The central axis Za may be located in the middle of the first edge E1 and the first edge Ea, and is orthogonal to the substrate. That is, the distance Daa between the central axis Za and the first edge E1 may be equal to the distance Dab between the central axis Za and the first edge Ea. A first sub-area 51Caa may be an area of the first cavity 51Ca located between the first edge E1 and the central axis Za. In other words, the first sub-area 51Caa may be a space between the plane S1 (i.e., yz plane) to which the first edge E1 belongs and the plane Sa. A second sub-area 51Cab may be an area of the first cavity 51Ca located between the central axis Za and the first edge Ea. In other words, the second sub-area 51Cab may be a space between the plane Sa and the yz plane to which the first edge Ea belongs.

The first light source 511a may be arranged closer to the partition wall 513 than the first part 512a of the wall 512. The center CLa of the first light source 511a may be spaced (offset) from the central axis Za of the first cavity 51Ca toward the partition wall 513. The first light source 511a may be arranged in the second sub-area 51Cab of the first cavity 51Ca. Accordingly, the amount (proportion) of the light of the first light source 511a that is provided to the portion of the diffusion plate 31 in front of the second light source 511b through the virtual plane S3 may be reduced.

The virtual plane S3 (the central axis Z3) may divide the space between the optical package 51 and the diffusion plate 31 into a first space Va toward which the first cavity 51Ca faces and a second space Vb toward which the second cavity 51Cb faces. The light from the first light source 511a may be distributed to a partial area of the diffusion plate 31. A first light distribution coverage Vaa may correspond to the first space Va, and may be an area of light that is provided from the first light source 511a and reaches the diffusion plate 31. A second light distribution coverage Vab may correspond to the second space Vb, and may be an area of light that is provided from the first light source 511a and reaches the diffusion plate 31. The width Waa of the first light distribution coverage Vaa may be larger than the width Wab of the second light distribution coverage Vab. The first light distribution coverage Vaa may be referred to as a long light distribution coverage Vaa or a wide light distribution coverage Vaa. The second light distribution coverage Vab may be referred to as a short light distribution coverage Vab or a narrow light distribution coverage Vab.

For example, the distance Xa between the center CLa of the first light source 511a and the partition wall 513 may be determined by the following Equation 1.$\left.Xa=Wab\cdot H11/H12\right〉$

Here, the width Wab is the width of the second light distribution coverage Vab, the height H11 is the distance from the bottom of the first light source 511a to the distal end (i.e., the front end) of the partition wall 513, and the height H12 is the distance from the distal end (i.e., the front end) of the partition wall 513 to the rear surface of the diffusion plate 31. The height H11 may be referred to as a height H11 of the partition wall 513, and the height H12 may be referred to as an optical depth H12 or an optical distance H12.

In this case, as the width Wab of the second light distribution coverage Vab becomes smaller, the distance Xa may become smaller. That is, in order to reduce the amount (proportion) of the light of the first light source 511a that is provided to a portion of the diffusion plate 31 corresponding to the second space Vb, the first light source 511a may be moved toward the partition wall 513. For example, the ratio of the second light distribution coverage Vab and the first light distribution coverage Vaa may be 3:7. That is, the proportion of the second light distribution coverage Vab to the entire light distribution coverage (Vaa and Vab) may be 0.3 (i.e., 30% in percentage). The proportion may be 0.3 or less. The proportion of the width Wab of the second light distribution coverage Vab to the width (Wab + Wab) of the entire light distribution coverage (Vaa and Vab) may be 0.3 (i.e., 30% in percentage). The proportion may be 0.3 or less.

Accordingly, the amount (proportion) of the light of the first light source 511a that is provided to the portion of the diffusion plate 31 corresponding to the second space Vb may be minimized or optimized, and as a result, the occurrence of a bright area due to excessive overlap of the light of the first light source 511a and the light of the second light source 511b may be minimized. In addition, the mura phenomenon may be minimized.

The central axis Zb of the second cavity 51Cb may pass through the center of the second cavity 51Cb, and may be parallel to the front-rear direction. The central axis Zb may belong to a plane Sb (i.e., yz plane) passing through the center of the second cavity 51Cb. The second edge Eb of the front surface of the partition wall 513 may face the second cavity 51Cb, and the second(inner) edge E2 of the second part 512b of the wall 512 may also face the second cavity 51Cb. The central axis Zb may be located in the middle of the second edge Eb and the second edge E2, and is orthogonal to the substrate. That is, the distance Dba between the central axis Zb and the second edge Eb may be equal to the distance Dbb between the central axis Zb and the second edge E2. A third sub-area 51Cba may be an area of the second cavity 51Cb located between the second edge Eb and the central axis Zb. In other words, the third sub-area 51Cba may be a space between the yz plane to which the second edge Eb belongs and the plane Sb. A fourth sub-area 51Cbb may be an area of the second cavity 51Cb located between the central axis Zb and the second edge E2. In other words, the fourth sub-area 51Cbb may be a space between the plane Sb and the plane S2 (i.e., the yz plane) to which the second edge E2 belongs.

The second light source 511b may be arranged closer to the partition wall 513 than the second part 512b of the wall 512. The center CLb of the second light source 511b may be spaced (offset) from the central axis Zb of the second cavity 51Cb toward the partition wall 513. The second light source 511b may be arranged in the third sub-area 51Cba of the second cavity 51Cb. Accordingly, the amount (proportion) of the light of the second light source 511b that is provided to a portion of the diffusion plate 31 in front of the first light source 511a through the virtual plane S3 may be reduced.

The virtual plane S3 may divide the space between the optical package 51 and the diffusion plate 31 into a second space Vb toward which the second cavity 51Cb faces and a first space Va toward which the first cavity 51Ca faces. The light from the second light source 511b may be distributed to a portion of the diffusion plate 31. The first light distribution coverage Vba may correspond to the second space Vb, and may be an area of the light that is provided from the second light source 511b and reaches the diffusion plate 31. The second light distribution coverage Vbb may correspond to the first space Va, and may be an area of the light that is provided from the second light source 511b and reaches the diffusion plate 31. The width Wba of the first light distribution coverage Vba may be referred to as a long light distribution coverage Vba or a wide light distribution coverage Vba. The second light distribution coverage Vbb may be referred to as a short light distribution coverage Vbb or a narrow light distribution coverage Vbb.

For example, the distance Xb between the center CLb of the second light source 511b and the partition wall 513 may be determined by the following Equation 2.$\left.Xb=Wbb\cdot H11/H12\right〉$

Here, the width Wbb is the width of the second light distribution coverage Vbb, the height H11 is the distance from the bottom of the second light source 511b to the distal end (i.e., the front end) of the partition wall 513, and the height H12 is the distance from the distal end (i.e., the front end) of the partition wall 513 to the rear surface of the diffusion plate 31. The height H11 may be referred to as a height H11 of the partition wall 513, and the height H12 may be referred to as an optical depth H12 or an optical distance H12.

In this case, as the width Wbb of the second light distribution coverage Vbb becomes smaller, the distance Xb may become smaller. That is, in order to reduce the amount (proportion) of the light of the second light source 511b that is provided to the portion of the diffusion plate 31 corresponding to the first space Va, the second light source 511b may be moved toward the partition wall 513. For example, the ratio of the second light distribution coverage Vbb and the first light distribution coverage Vba may be 3:7. That is, the proportion of the second light distribution coverage Vbb to the entire light distribution coverage (Vba and Vbb) may be 0.3 (i.e., 30% in percentage). The proportion may be 0.3 or less. The proportion of the width Wbb of the second light distribution coverage Vbb to the width (Wbb + Wbb) of the entire light distribution coverage (Vba and Vbb) may be 0.3 (i.e., 30% in percentage). The proportion may be 0.3 or less.

Accordingly, the amount (proportion) of the light of the second light source 511b that is provided to a portion of the diffusion plate 31 corresponding to the first space Va may be minimized or optimized, and as a result, the occurrence of a bright area due to excessive overlap of the light of the second light source 511b and the light of the first light source 511a may be minimized. In addition, the mura phenomenon may be minimized.

The inner surface 512G of the wall 512 may face the cavity 51Ca; 51Cb. The inner surface 512G may form an obtuse angle (theta g) with respect to the lead frame 510 on which the wall 512 is mounted. The inner surface 512G may guide the light of the light source (511a; 511b).

The partition wall 513 may have a rectangular cross section. For example, the partition wall 513 may have a rectangular cross section. For another example, the partition wall 513 may have a trapezoidal cross-section. In this case, the bottom (i.e., the rear surface) of the partition wall 513 may form the lower side of the trapezoid, and the top (i.e., the front surface) of the partition wall 513 may form the upper side of the trapezoid. The angle between lead frame 510 and the side surface of the partition wall 513 may be 90 degrees or an obtuse angle. With respect to the lead frame 510, the height of the light source (511a; 511b) may be less than the height of the partition wall 513 and the height of the wall 512. With respect to the lead frame 510, the height of the partition wall 513 may be equal to or greater than the height of the wall 512.

For example, with respect to the partition wall 513, the first light source 511a and the first cavity 51Ca may be symmetrical with the second light source 511b and the second cavity 51Cb.

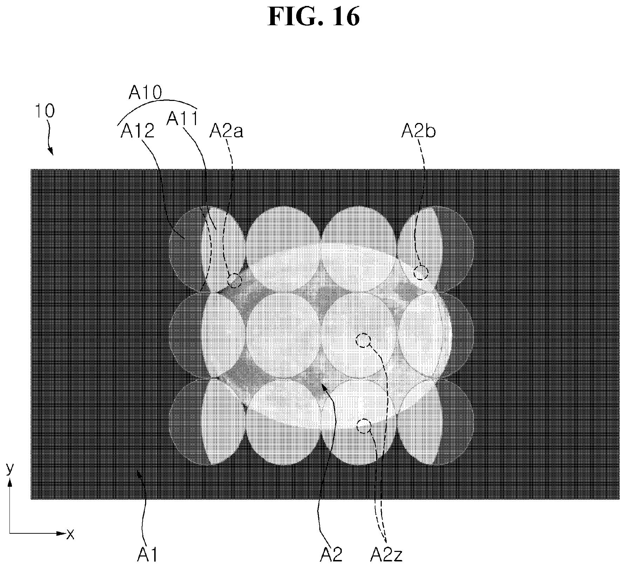

Referring to FIGS. 16 and 18, one optical package 51 may include two light sources 511a and 511b, and the partition wall 513 may be located between the two light sources 511a and 511b. The brightness of each light source may be individually controlled, thereby forming a local dimming block.

The light from a specific optical package 51 may be provided to a specific area A10 of the display panel 10. The specific area A10 may be circular. The light from the first light source 511a may be provided to a first area A11 of the specific area A10, and the light from the second light source 511b may be provided to a second area A12 of a specific area A10.

For example, in order to provide light to a first part A2a of the bright moon A2, the first light source 511a of the optical package 51 corresponding to the first part A2a may be driven, but the second light source 511b may not be driven.

For example, in order to provide light to a second part A2b of the bright moon A2, the second light source 511b of the optical package 51 corresponding to the second part A2b may be driven, but the first light source 511a may not be driven.

For example, in order to provide light to a third part A2z of the bright moon A2, both the first and second light sources 511a, 511b of the optical package 51 corresponding to the third part A2z may be driven.

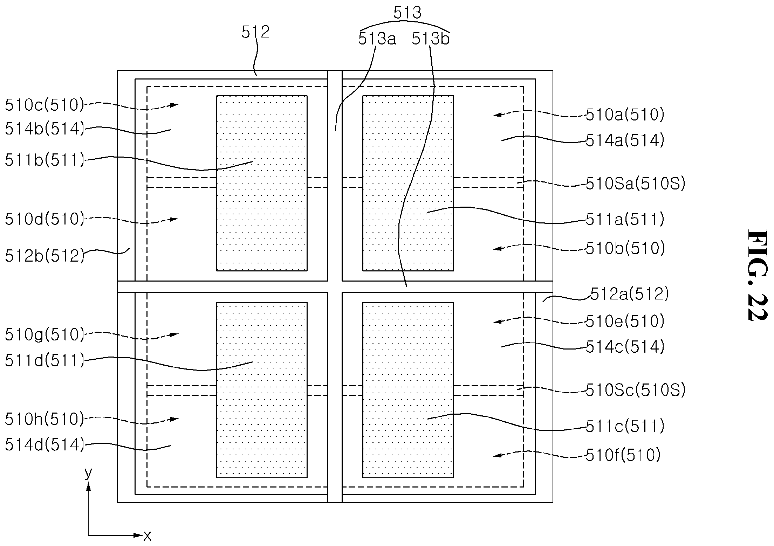

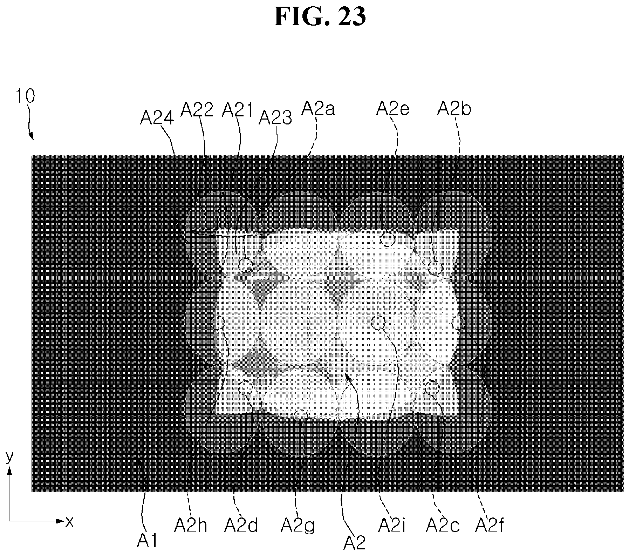

Referring to FIGS. 22 and 23, one optical package 51 may include four light sources 511a, 511b, 511c, 511d, and each light source may form a local dimming block. The optical package 51 may be a square or rectangular assembly.

Specifically, the lead frames 510 of the optical package 51 may be electrically connected to the substrate. The first to eighth lead frames 510a, 510b, 510c, 510d, 510e, 510f, 510g, 510h may be arranged in a 4X2 matrix form, and may be adjacent to each other but spaced apart from each other.

The spacers 510Sa, 510Sb and the partition walls 513a, 513b may be located between the first to eighth lead frames 510a, 510b, 510c, 510d, 510e, 510f, 510g, 510h. The wall 512 may extend along the circumference of the lead frames 510.

A first light source 511a may be mounted on the first lead frame 510a and the second lead frame 510b, and may be covered by the first encapsulation 514a.

A second light source 511b may be mounted on the third lead frame 510c and the fourth lead frame 510d, and may be covered by the second encapsulation 514b.

A third light source 511c may be mounted on a fifth lead frame 510e and a sixth lead frame 510f, and may be covered by a third encapsulation 514c.

A fourth light source 511d may be mounted on a seventh lead frame 510g and an eighth lead frame 510h, and may be covered by a fourth encapsulation 514d.

For example, the light source 511 may be a chip having a rectangular shape. For example, the long side of the first light source 511a and the long side of the second light source 511b may face each other. For example, the long side of the third light source 511c and the long side of the fourth light source 511d may face each other.

The partition wall 513 may be located between the first to third light sources 511a, 511b, 511c, 511d. The vertical partition wall 513a may be located between the first light source 511a and the second light source 511b, and further, the vertical partition wall 513a may be located between the third light source 511c and the fourth light source 511d. The horizontal partition wall 513b may be located between the first light source 511a and the third light source 511c, and further, the horizontal partition wall 513b may be located between the second light source 511b and the fourth light source 511d.

The brightness of each of the first to fourth light sources 511a, 511b, 511c, 511d may be individually controlled, and thus each light source may form a local dimming block. As described above, the number of local dimming blocks formed by a single optical package 51 may be equal to the number of light sources provided by the optical package 51. The number of the light sources may be two or more. Three or more of the light sources may be directed toward the rear groove 533 (see FIG. 20) of the lens 53, like two light sources 511a, 511b. The optical package 51 may be a 1 die-N LED chips package. Here, N is a natural number greater than or equal to 2.

The light from a specific optical package 51 may be provided to a specific area A20 of the display panel 10. The specific area A20 may have a circular shape. The light of the first light source 511a may be provided to a first area A21 of the specific area A20, and the light of the second light source 511b may be provided to a second area A22 of the specific area A20. The light of the third light source 511c may be provided to a third area A23 of the specific area A20. The light of the fourth light source 511d may be provided to the fourth area A24 of the specific area A20.

For example, in order to provide light to the first part A2a of the bright moon A2, the third light source 511c of the optical package 51 corresponding to the first part A2a may be driven, but the remaining light sources 511a, 511b, 511d may not be driven.

For example, in order to provide light to the second part A2b of the bright moon A2, the fourth light source 511d of the optical package 51 corresponding to the second part A2b may be driven, but the remaining light sources 511a, 511b, 511c may not be driven.

For example, in order to provide light to a third part A2c of the bright moon A2, the second light source 511b of the optical package 51 corresponding to the third part A2c may be driven, but the remaining light sources 511a, 511c, 511d may not be driven.

For example, in order to provide light to a fourth part A2d of the bright moon A2, the first light source 511a of the optical package 51 corresponding to the fourth part A2d may be driven, but the remaining light sources 511b, 511c, 511d may not be driven.

For example, in order to provide light to a fifth part A2e of the bright moon A2, the third and fourth light sources 511c, 511d of the optical package 51 corresponding to the fifth part A2e may be driven, but the remaining light sources 511a, 511b may not be driven.

For example, in order to provide light to a sixth part A2f of the bright moon A2, the second and fourth light sources 511b, 511d of the optical package 51 corresponding to the sixth part A2f may be driven, but the remaining light sources 511a, 511c may not be driven.

For example, in order to provide light to a seventh part A2g of the bright moon A2, the first and second light sources 511a, 511b of the optical package 51 corresponding to the seventh part A2g may be driven, but the remaining light sources 511c, 511d may not be driven.

For example, in order to provide light to an eighth part A2h of the bright moon A2, the first and third light sources 511a, 511c of the optical package 51 corresponding to the eighth part A2h may be driven, but the remaining light sources 511b, 511d may not be driven.

For example, in order to provide light to a ninth part A2i of the bright moon A2, all of the first to fourth light sources 511a, 511b, 511c, 511d of the optical package 51 corresponding to the ninth part A2i may be driven.

Accordingly, as the number of local dimming blocks formed by one optical package 51 increases, the phenomenon of light spreading around the bright moon A2, i.e., the halo phenomenon, may be reduced. That is, as the number of light sources 511 provided by one optical package 51 increases, the image quality may be improved.

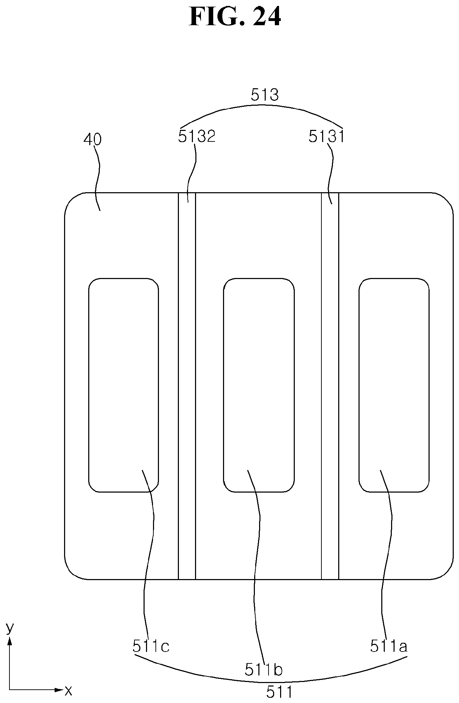

Referring to FIG. 24, one optical package 51 may include three light sources 511a, 511b, 511c. The three light sources 511a, 511b, 511c may be arranged in one row. A first partition wall 5131 may be located between the first light source 511a and the second light source 511b, and a second partition wall 5132 may be located between the second light source 511b and the third light source 511c. The first partition wall 5131 may block the light of the first light source 511a from proceeding to an area in front of the second light source 511b, and may block the light of the second light source 511b from proceeding to an area in front of the first light source 511a. The second partition wall 5132 may block the light of the second light source 511b from proceeding to an area in front of the third light source 511c, and may block the light of the third light source 511c from proceeding to an area in front of the second light source 511b. Each of the first to third light sources 511a, 511b, 511c may be individually controlled. Accordingly, one optical package 51 may provide a first local dimming block formed by a first light source 511a, a second local dimming block formed by a second light source 511b, and a third local dimming block formed by a third light source 511c.

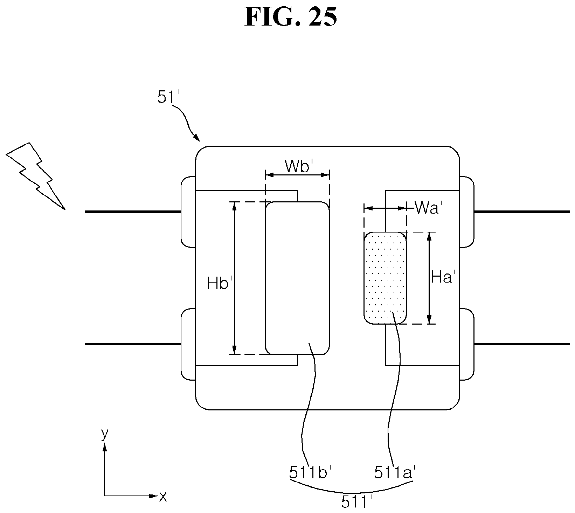

Referring to FIGS. 25 to 28, one optical package 51' may include light sources 511' of different sizes. The light sources 511' may be Light Emitting Diode Chips (LED chips) 511'. The optical package 51' may be referred to as an LED package 51' or an optical assembly 51'. The light sources 511' may be adjacent to each other but spaced apart from each other. The light source 511' may be a chip having a rectangular parallelepiped shape, and five surfaces of the light source 511' excluding the bottom surface may emit light. The size of a second light source 511b' may be larger than the size of a first light source 511a'. A ratio of the size of the second light source 511b' and the size of the first light source 511a' may be 2:1. The width Wb' of the second light source 511b' may be larger than the width Wa' of the first light source 511a'. The height Hb' of the second light source 511b' may be larger than the height Ha' of the first light source 511a'. The thickness of the second light source 511b' may be larger than the thickness of the first light source 511a'.

Accordingly, at a specific current, the light amount (brightness) of the second light source 511b' may be greater than the light amount (brightness) of the first light source 511a' Each of the first and second light sources 511a', 511b' may be individually controlled.

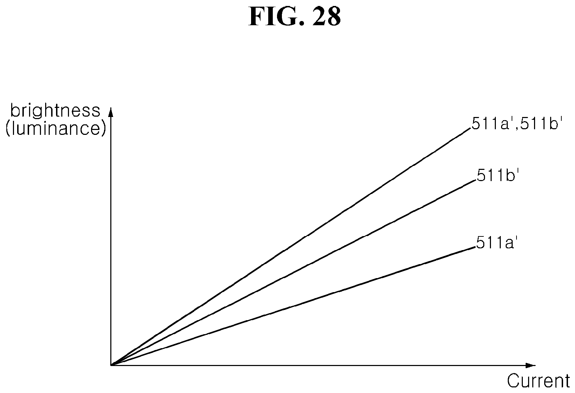

Referring to FIGS. 25 and 28, the second light source 511b' may be driven, but the first light source 511a' may not be driven. As the amount of current flowing through the second light source 511b' increases, the brightness of the second light source 511b' may increase.

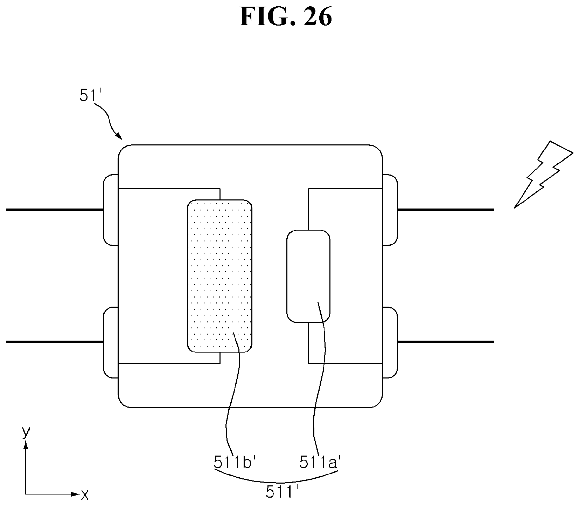

Referring to FIGS. 26 and 28, the first light source 511a' may be driven, but the second light source 511b' may not be driven. As the amount of current flowing through the first light source 511a' increases, the brightness of the first light source 511a' may increase. The gradient of the brightness of the first light source 511a' may be smaller than the gradient of the brightness of the second light source 511b'.

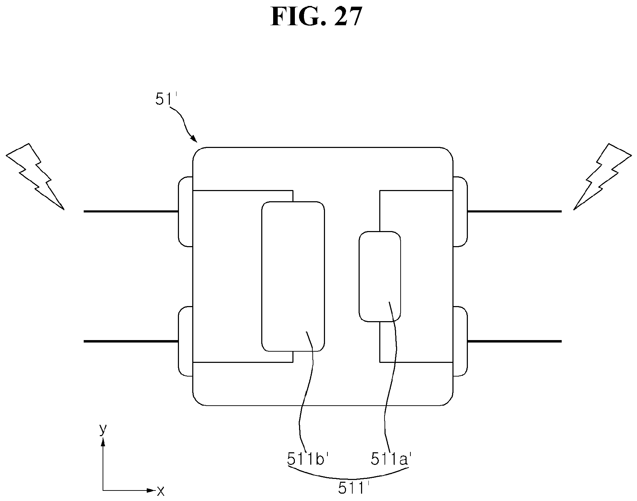

Referring to FIGS. 27 and 28, both the first and second light sources 511a', 511b' may be driven. As the amount of current flowing through the first and second light sources 511a', 511b' increases, the brightness of the first and second light sources 511a', 511b' may increase.

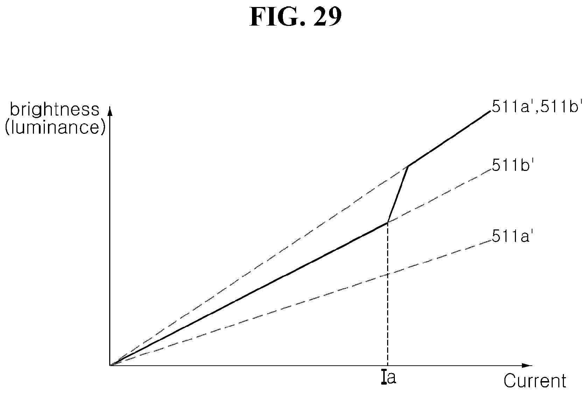

Referring to FIGS. 29 to 31, the brightness of the optical package 51' may vary depending on the amount of current applied to the optical package 51'.

Referring to FIG. 29, the current applied to the optical package 51' may be less than a reference current Ia or greater than the reference current Ia. If a current less than the reference current Ia is applied to the optical package 51', the current may flow only to the second light source 511b' and drive the second light source 511b'. If a current greater than or equal to the reference current Ia is applied to the optical package 51', the current may flow to the first and second light sources 511a', 511b' and drive the first and second light sources 511a', 511b'. That is, the brightness gradient of the optical package 51' may change based on the reference current Ia. This may be referred to as a high-grayscale enhancement type control.

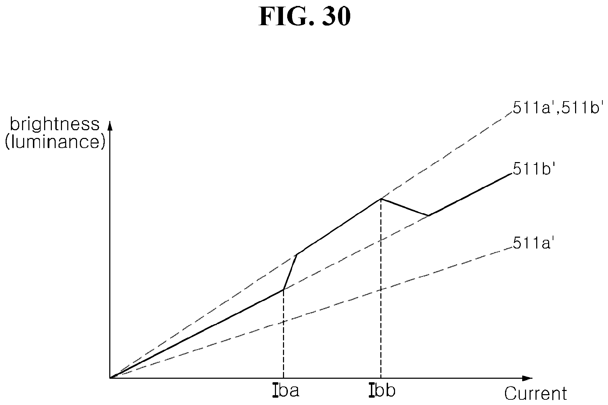

Referring to FIG. 30, the current applied to the optical package 51' may be less than a first reference current Iba, may be greater than or equal to the first reference current Iba and less than a second reference current Ibb, or may be greater than or equal to the second reference current Ibb. When a current less than the first reference current Iba is applied to the optical package 51', the current may flow only to the second light source 511b' to drive the second light source 511b'. When a current greater than or equal to the first reference current Iba and less than the second reference current Ibb is applied to the optical package 51', the current may flow to the first and second light sources 511a', 511b' to drive the first and second light sources 511a', 511b'. When a current greater than or equal to the second reference current Ibb is applied to the optical package 51', the current may flow only to the second light source 511b' to drive the second light source 511b'. That is, the brightness gradient of the optical package 51' may change based on the first and second reference currents Iba, Ibb. This may be referred to as an intermediate-grayscale enhancement type control.

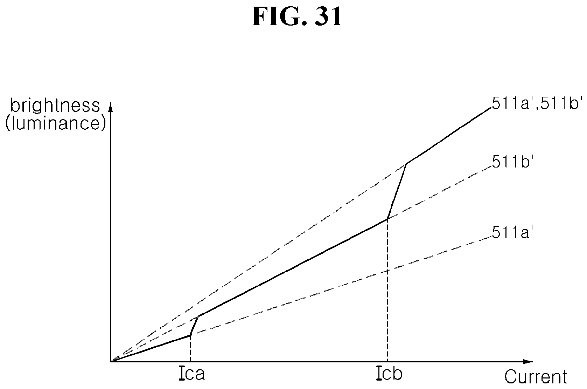

Referring to FIG. 31, the current applied to the optical package 51' may be less than a first reference current Ica, greater than the first reference current Ica and less than a second reference current Icb, or greater than the second reference current Icb. When a current less than the first reference current Ica is applied to the optical package 51', the current may flow only to the first light source 511a' and drive the first light source 511a'. When a current greater than the first reference current Ica but less than the second reference current Icb is applied to the optical package 51', the current may flow only to the second light source 511b' and drive the second light source 511b'. When a current greater than the second reference current Icb is applied to the optical package 51', the current may flow to the first and second light sources 511a', 511b' and drive the first and second light sources 511a', 511b'. That is, the brightness gradient of the optical package 51' may change based on the first and second reference currents Ica, Icb. This may be referred to as a low-grayscale and high-grayscale enhancement type control.

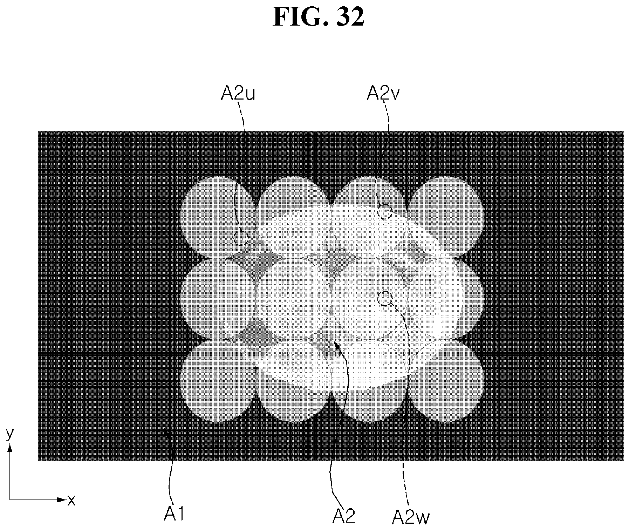

Referring to FIG. 32 together with FIGS. 25 to 28, one optical package 51' may include two light sources 511a', 511b' of different sizes and may form one local dimming block.

For example, in order to provide light to a first part A2u of the bright moon A2, the first light source 511a' of the optical package 51' corresponding to the first part A2u may be driven, but the second light source 511b' may not be driven.

For example, in order to provide light to a second part A2v of the bright moon A2, the second light source 511b' of the optical package 51' corresponding to the second part A2v may be driven, but the first light source 511a' may not be driven.

For example, in order to provide light to a third part A2w of the bright moon A2, both the first and second light sources 511a', 511b' of the optical package 51' corresponding to the third part A2w may be driven.

Accordingly, the brightness of each local dimming block may be controlled more diversely.

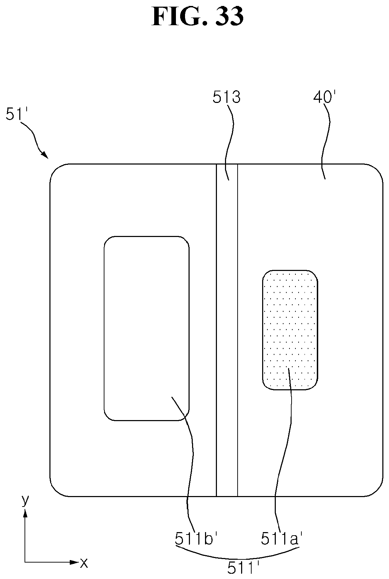

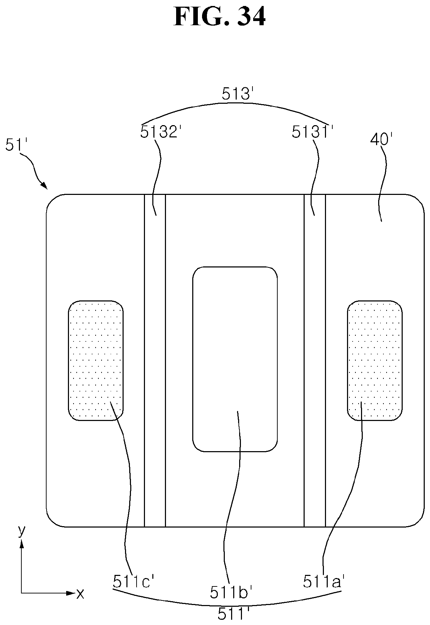

Referring to FIGS. 33 and 34, the optical package 51' may include a partition wall 513' arranged between the light sources 511'. The long extended partition wall 513' may protrude further forward from the substrate 40' than the light sources 511'. The light distribution of each light source 511' may be separated by the partition wall 513'.

Referring to FIG. 33, the partition wall 513' may be located between the first light source 511a' and the second light source 511b'. The partition wall 513' may block the light of the first light source 511a' from proceeding to an area in front of the second light source 511b', and may block the light of the second light source 511b' from proceeding to an area in front of the first light source 511a'. Each of the first and second light sources 511a', 511b' may be individually controlled. Accordingly, one optical package 51' may provide a first local dimming block formed by the first light source 511a' and a second local dimming block formed by the second light source 511b'

Referring to FIG. 34, a first partition wall 5131' may be located between the first light source 511a' and the second light source 511b', and a second partition wall 5132' may be located between the second light source 511b' and the third light source 511c'. For example, the first light source 511a' and the third light source 511c' may have the same size, and the size of the second light source 511b' may be larger than the size of the first light source 511a'. For another example, the first light source 511a' and the third light source 511c' may have the same size, and the size of the second light source 511b' may be smaller than the size of the first light source 511a'. The first partition wall 5131' may block the light of the first light source 511a' from progressing to an area in front of the second light source 511b' and may block the light of the second light source 511b' from progressing to an area in front of the first light source 511a'. The second partition wall 5132' may block the light of the second light source 511b' from progressing to an area in front of the third light source 511c' and may block the light of the third light source 511c' from progressing to an area in front of the second light source 511b'. Each of the first to third light sources 511a', 511b', 511c' may be individually controlled. Accordingly, one optical package 51' may provide a first local dimming block formed by the first light source 511a', a second local dimming block formed by the second light source 511b', and a third local dimming block formed by the third light source 511c'.

Accordingly, one optical package 51' may provide a plurality of local dimming blocks. At this time, the brightness gradient of one local dimming block may be different from the brightness gradient of another local dimming block.

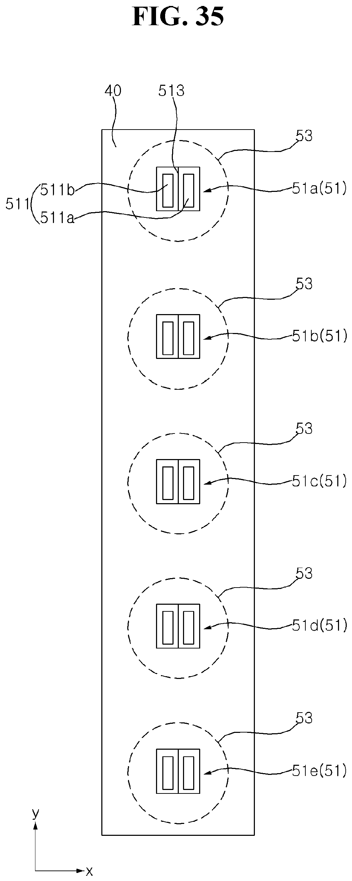

Referring to FIG. 35, a plurality of optical packages 51 may be arranged along the substrate 40. The substrate 40 may have a vertically long bar shape. Alternatively, the substrate 40 may have a horizontally long bar shape. Alternatively, the substrate 40 may have a plate shape, and the optical packages 51 may be arranged in a horizontal or vertical direction. The direction (e.g., horizontal direction) in which the light sources 511a, 511b of the optical package 51 are arranged may intersect with the direction (e.g., vertical direction) in which the optical packages 51 are arranged. Each of the plurality of lenses 53 may cover each of the plurality of optical packages 51a, 51b, 51c, 51d, 51e.

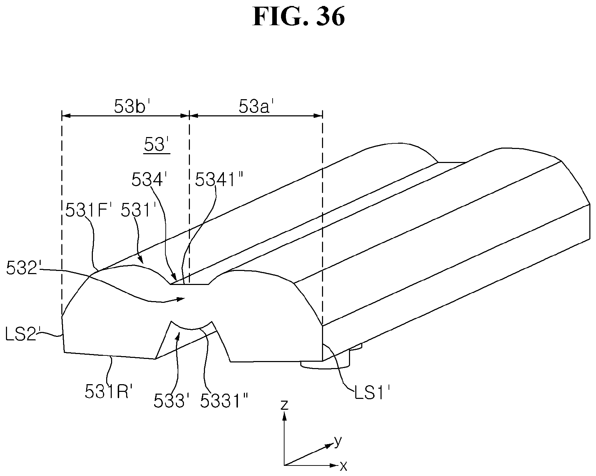

Referring to FIG. 36, instead of the lenses 53, a single lens 53' may cover a plurality of optical packages 51a, 51b, 51c, 51d, 51e. The lens 53' may be coupled or attached to the substrate 40. The longitudinal section of the lens 53' may be the same as the longitudinal section VV' (see FIG. 20) of the lens 53. However, whereas the lens 53 has a hemispherical shape as a whole, the lens 53' may be elongated in the direction in which the optical packages 51a, 51b, 51c, 51d, 51e are arranged. The lens 53' may include a dome part 531', a rear groove 533', and a front groove 534'. The rear groove 533' and the front groove 534' may be formed in the central portion of the lens 53'. The portion of the lens 53' where the rear groove 533' and the front groove 534' are formed may be referred to as a central part 532'.

The dome part 531' may have a convex roof shape. The dome part 531' may be referred to as a roof part 531' or an arched part 531'. The front surface 531F' of the dome part 531' may be curved, and the rear surface 531R' of the dome part 531' may be a plane.

The rear groove 533' may be recessed from the rear surface 531R' of the dome part 531'. The rear groove 533' may be a tunnel-shaped groove.

The front groove 534' may be recessed from the front surface 531F' of the dome part 531'. The front groove 534' may be a trench-shaped groove.

A first part 53a' of the lens 53' may be a portion of the lens 53' located between the center of the lens 53' and a first long side LS1' of the lens 53', and may correspond to the first light source 511a'. A second part 53b' of the lens 53' may be a portion of the lens 53' located between the center of the lens 53' and a second long side LS2' of the lens 53', and may correspond to the second light source 511b'

A plurality of optical packages 51 may be located in the rear groove 533'. The optical package 51 may be spaced apart from a bottom 5331' of the rear groove 533'. The distance between the light source 511 of the optical package 51 and the bottom 5331' of the rear groove 533' may be about 1 mm. The bottom 5331" of the rear groove 533' facing the light sources 511a, 511b of the plurality of optical packages 51 may be a convex curved surface facing the light sources 511a, 511b. Alternatively, the bottom 5331" may be a plane.

A portion of the light of the first light sources 511a of the plurality of optical packages 51 and a portion of the light of the second light sources 511b may pass through the bottom 5341' of the front groove 534'. The bottom 5341" of the front groove 534' facing the light sources 511a, 511b of the plurality of optical packages 51 may be a plane. Alternatively, the bottom 5341" may be a concave curved surface. Accordingly, the lens 53' may contribute to minimizing the area where the local dimming block formed by the first light source 511a of each optical package 51 overlaps with the local dimming block formed by the second light source 511b.

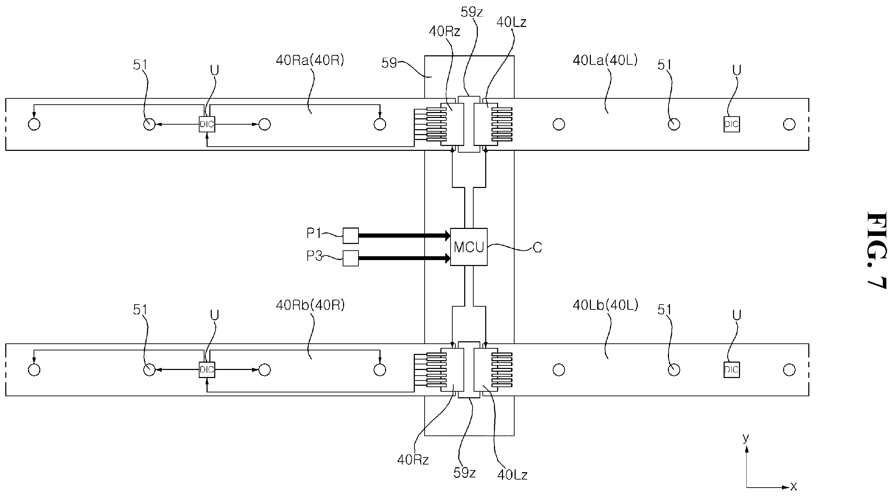

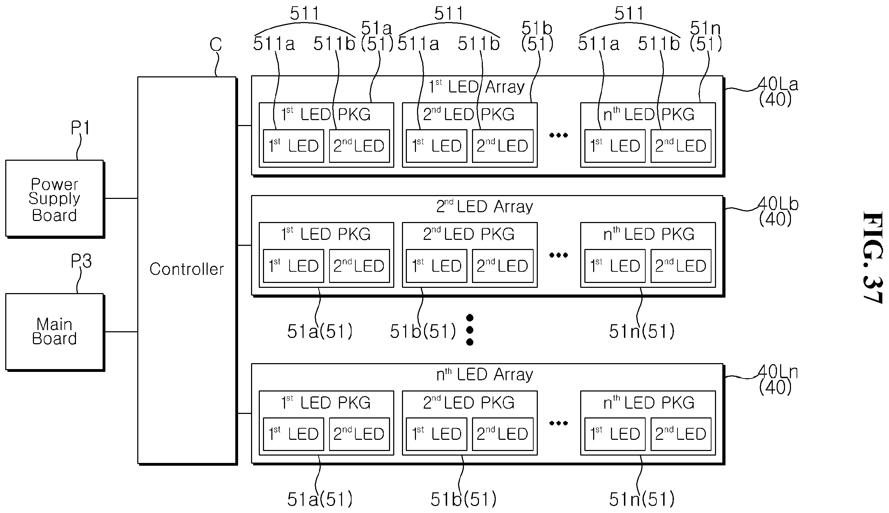

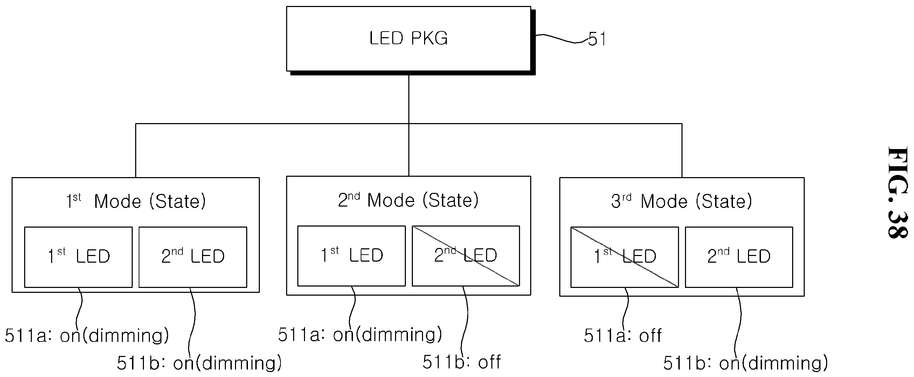

Referring to FIGS. 37 and 38, the controller C may be electrically connected to the plurality of substrates 40. The controller C may be mounted on an extension board 59 (see FIG. 7) to which a plurality of substrates 40 are coupled. The controller C may receive data on the image quality (e.g., brightness) of the optical packages 51 of each substrate 40 from the main board P3, and control the brightness of the optical packages 51. The controller C may convert (process) the data received from the main board P3 and provide the data to a driver IC U (see FIG. 7) of each substrate 40, and the driver IC U may control the brightness of the optical packages 51. The controller C may be electrically connected to a memory in which a program (computer program code) for controlling the brightness of the optical packages 51, data, etc. are stored. The memory may be provided as one body with the controller C, and classified as a sub-component of the controller C. Alternatively, the memory may be external to the controller C, and classified as a separate component from the controller C. The memory may be a non-volatile memory.

Accordingly, the controller C may control the brightness of each of the light sources 511a, 511b of each of the optical packages 51 of each substrate 40. The optical packages 51 of each substrate 40 may be referred to as a light array 51 or an LED array 51.

In a first mode (state) of each optical package 51, the controller C may control the brightness (i.e., control dimming) by turning on both the first light source 511a and the second light source 511b.

In a second mode (state) of each optical package 51, the controller C may control the brightness (i.e., control dimming) by turning on the first light source 511a, and turning off the second light source 511b.

In a third mode (state) of each optical package 51, the controller C may control brightness (i.e., control dimming) by turning on the second light source 511b, and turning off the first light source 511a.

Referring to FIGS. 1 to 38, the display device 1 includes:
a display panel 10; and a backlight unit providing light to the display panel 10, wherein the backlight unit includes:
a substrate 40; a plurality of optical packages 51 located on the substrate 40; and a lens 53 covering the optical package 51, wherein the optical package 51 includes:
a first light source 511a on the substrate 40; a second light source 511b adjacent to the first light source 511a; and a partition wall 513 between the first light source 511a and the second light source 511b.

A brightness of the first light source 511a and a brightness of the second light source 511b are controlled independently of each other. The first light source 511a may form a first local dimming block, and the second light source 511b may form a second local dimming block.

In a first mode of the optical package 51, both the first light source 511a and the second light source 511b may be turned on, and a brightness of the first light source and a brightness of the second light source may be controlled. In a second mode of the optical package 51, the first light source 511a may be turned on, and a brightness of the first light source may be controlled, but the second light source 511b may be turned off. In a third mode of the optical package 51, the second light source 511b may be turned on, and a brightness of the second light source may be controlled, but the first light source 511a may be turned off.

The optical package 51 may further include: a wall 512 surrounding the first and second light sources 511a, 511b, the wall 512 having a first part 512a and a second part 512b opposite to each other with respect to the partition wall 513; a first cavity 51Ca between the first part 512a and the partition wall 513; and a second cavity 51Cb between the partition wall 513 and the second part 512b.

The first light source 511a may be located in the first cavity 51Ca, and may be arranged closer to the partition wall 513 than the first part 512a. The second light source 511b may be located in the second cavity 51Cb, and may be arranged closer to the partition wall 513 than the second part 512b.

The first cavity 51Ca may include: a first sub-area 51Caa between the first part 512a and a central axis Za of the first cavity 51Ca; and a second sub-area 51Cab between the central axis Za of the first cavity 51Ca and the partition wall 513, the second cavity 51Cb may include: a third sub-area 51Cba between the partition wall 513 and a central axis Zb of the second cavity 51Cb; and a fourth sub-area 51Cbb between the central axis Zb of the second cavity 51Cb and the second part 512b, wherein the first light source 511a may be located in the second sub-area 51Cab, and the second light source 511b may be located in the third sub-area 51Cba.

A height at which the partition wall 513 protrudes from the substrate 40 may be greater than a height at which the first and second light sources 511a, 511b protrude from the substrate 40, and the first and second light sources 511a, 511b may be adjacent to the partition wall 513.

A space in front of the optical package 51 may include: a first space Va in front of the first light source 511a; and a second space Vb in front of the second light source 511b, in which a central axis Z3 of the partition wall 513 may be located between the first space Va and the second space Vb, and wherein a portion of light of the first light source 511a may pass through the second space Vb.

The backlight unit may further include a diffusion plate 31 between the display panel 10 and the lens 53, wherein the diffusion plate 31 may include: a first light distribution coverage Vaa which corresponds to the first space Va, and at which a portion of the light of the first light source 511a arrives; and a second light distribution coverage Vab which corresponds to the second space Vb, and at which a portion of the light of the first light source 511a arrives, wherein a proportion of the second light distribution coverage Vab to the first and second light distribution coverages Vaa, Vab may be 0.3 or less.

The optical package 51 may further include: a wall 512 surrounding the first and second light sources 511a, 511b; a first cavity 51Ca formed between a first part 512a of the wall 512 and the partition wall 513, and in which the first light source 511a may be located; a second cavity 51Cb formed between a second part 512b of the wall 512 and the partition wall 513, and in which the second light source 511b may be located; a first encapsulation 514a filled in the first cavity 51Ca, and covering the first light source 511a; and a second encapsulation 514b filled in the second cavity 51Cb, and covering the second light source 511b.

The optical package 51 may further include a lead frame 510 which may be electrically connected to the substrate 40, and on which the first and second light sources 511a, 511b may be located.

The optical package 51 may further include at least one light source 511c in addition to the first and second light sources 511a, 511b, wherein a brightness of the first light source 511a, a brightness of the second light source 511b, and a brightness of the at least one light source 511c may be independently controlled, and wherein the lens 53 may cover the first and second light sources 511a, 511b and the at least one light source 511c.

At a specific current, a brightness of the second light source 511b' may be greater than a brightness of the first light source 511a'.

The second light source 511b' may be greater than the first light source 511a', and the brightness of the second light source 511b' and the brightness of the first light source 511a' may be independently controlled.

The lens 53 may include: a convex dome part 531; a rear groove 533 recessed from a rear surface 531R of the dome part 531, and facing the optical package 51; and a front groove 534 recessed from a front surface 531F of the dome part 531, and opposite to the rear groove 533, wherein a central axis Z3 of the partition wall 513 may extend in a direction intersecting with the rear groove 533 and the front groove 534.

A bottom (5331; 5331') of the rear groove 533 may be a convex curved surface 5331 toward the first and second light sources 511a, 511b of the optical package 51, or a plane 5331'.

A bottom (5341; 5341') of the front groove 534 may be a plane 5341 or a concave curved surface 5341' toward an inner side of the lens 53.

The lens 53' may extend in a direction in which the plurality of optical packages 51 may be arranged, and may cover the plurality of optical packages 51.

The display device 1 may further include a controller C which controls a brightness of the first light source 511a and a brightness of the second light source 511b.

The effects of the display device according to the present disclosure are described as follows.

According to at least one of the embodiments of the present disclosure, there may be provided a structure capable of improving image quality by implementing a large number of local dimming blocks.

According to at least one of the embodiments of the present disclosure, there may be provided a structure capable of improving the contrast ratio of an image and minimizing the halo phenomenon of an image, as each of a plurality of light sources provided in one optical package forms a local dimming block.

According to at least one of the embodiments of the present disclosure, there may be provided a display device capable of reducing manufacturing costs by providing a larger number of local dimming blocks than the number of optical packages.

According to at least one of the embodiments of the present disclosure, there may be provided a structure capable of minimizing the overlap of light distribution coverages of light sources in an optical package.

According to at least one of the embodiments of the present disclosure, there may be provided a structure capable of minimizing the overlap of light distribution coverages of light sources by a lens covering an optical package.

According to at least one of the embodiments of the present disclosure, there may be provided various examples of the number or arrangement of light sources in an optical package.

According to at least one of the embodiments of the present disclosure, there may be provided a structure that differentiates the brightness or size of light sources in an optical package.

According to at least one of the embodiments of the present disclosure, there may be provided various examples of the shape of a lens covering an optical package.

According to at least one of the embodiments of the present disclosure, there may be provided a method of individually controlling the brightness of the light sources of an optical package.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

## Claims

1. A display device (1) comprising:
a display panel (10); and
a backlight unit providing light to the display panel (10),
wherein the backlight unit comprises:
a substrate (40);
a plurality of optical packages (51) located on the substrate (40); and
a lens (53) covering at least one optical package among the plurality of optical packages (51),
wherein the optical package (51) comprises:
a first light source (511a) on the substrate (40);
a second light source (511b) adjacent to the first light source (511a); and
a partition wall (513) between the first light source (511a) and the second light source (511b),
wherein the optical package (51) is configured such that:
in a first mode of the optical package (51), both the first light source (511a) and the second light source (511b) are turned on, and a brightness of the first light source (511a) and a brightness of the second light source (511b) are controlled;
in a second mode of the optical package (51), the first light source (511a) is turned on, and a brightness of the first light (511a) source is controlled, but the second light source (511b) is not driven or turned off; and
in a third mode of the optical package (51), the second light source (511b) is turned on, and a brightness of the second light source (511b) is controlled, but the first light source (511a) is not driven or turned off.

2. The display device (1) of claim 1, wherein the optical package (51) further comprises:
a wall (512) surrounding the first and second light sources (511a; 511b), the wall (512) having a first part (512a) and a second part (512b) opposite to each other with respect to the partition wall (513);
a first cavity (51Ca) between the first part (512a) and the partition wall (513); and
a second cavity (51Cb) between the partition wall (513) and the second part (512b),
wherein the first cavity (51Ca) comprises:
a first sub-area (51Caa) between the first part (512a) and a central axis (Za) of the first cavity (51Ca); and
a second sub-area (51Cab) between the central axis (Za) of the first cavity (51Ca) and the partition wall (513),
wherein the second cavity (51Cb) comprises:
a third sub-area (51Cba) between the partition wall (513) and a central axis (Zb) of the second cavity (51Cb); and
a fourth sub-area (51Cbb) between the central axis (Zb) of the second cavity (51Cb) and the second part (512b),
wherein the first light source (511a) is located in the second sub-area (51Cab), and the second light source (511b) is located in the third sub-area (51Cba).

3. The display device (1) of claim 1 or 2, wherein a height of the partition wall (513) protruding from the substrate (40) is greater than a height of the first and second light sources (511a; 511b) protruding from the substrate (40), and the first and second light sources (511a, 511b) are adjacent to the partition wall (513).

4. The display device (1) of any one of claims 1 to 3, wherein a space in front of the optical package (51) is divided by a central axis (Z3) of the partition wall (513) into a first space (Va) in front of the first light source (511a) and a second space (Vb) in front of the second light source (511b), and
wherein a portion of light of the first light source (511a) passes through the second space (Vb).

5. The display device (1) of claim 4, wherein the backlight unit further comprises a diffusion plate (31) between the display panel (10) and the lens (53),
wherein the diffusion plate (31) comprises:
a first light distribution coverage (Vaa) which corresponds to the first space (Va), and at which a portion of the light of the first light source (511a) arrives; and
a second light distribution coverage (Vab) which corresponds to the second space (Vb), and at which a portion of the light of the first light source (511b) arrives,
wherein a proportion of the second light distribution coverage (Vab) to the first and second light distribution coverages (Vaa, Vab) is 0.3 or less.

6. The display device (1) of claim 1, wherein the optical package (51) further comprises:
a wall (512) surrounding the first and second light sources (511a; 511b);
a first cavity (51Ca) formed between a first part (512a) of the wall (512) and the partition wall (513), and in which the first light source (511a) is located;
a second cavity (51Cb) formed between a second part (512b) of the wall (512) and the partition wall (513), and in which the second light source (511b) is located;
a first encapsulation (514a) filled in the first cavity (51Ca), and covering the first light source (511a); and
a second encapsulation (514b) filled in the second cavity (51Cb), and covering the second light source (511b).

7. The display device (1) of claim 6, wherein the optical package (51) further comprises a lead frame (510) which is electrically connected to the substrate (40), and on which the first and second light sources (511a, 511b) are located.

8. The display device (1) of any one of claims 1 to 7, wherein the optical package (51) further comprises at least one light source (511c) in addition to the first and second light sources (511a; 511b),
wherein a brightness of the first light source (511a), a brightness of the second light source (511b), and a brightness of the at least one light source (511c) are independently controlled,
wherein the lens (53) covers the first and second light sources (511a; 511b) and the at least one light source (511c).

9. The display device (1) of any one of claims 1 to 8, wherein, at a specific current, a brightness of the second light source (511b') is greater than a brightness of the first light source (511a').

10. The display device (1) of claim 9, wherein the second light source (511b') is greater than the first light source (511a'), and the brightness of the second light source (511b') and the brightness of the first light source (511a') are independently controlled.

11. The display device (1) of any one of claims 1 to 10, wherein the lens (53) comprises:
a convex dome part (531);
a rear groove (533) recessed from a rear surface of the dome part (531), and facing the optical package (51); and
a front groove (534) recessed from a front surface of the dome part (531), and disposed opposite to the rear groove (533),
wherein a central axis (Z3) of the partition wall (513) extends in a direction intersecting with the rear groove (533) and the front groove (534).

12. The display device (1) of claim 11, wherein a bottom surface (5331; 5331') of the rear groove (533) is a convex curved surface (5331) toward the first and second light sources of the optical package, or a plane surface (5331').

13. The display device (1) of claim 11 or 12, wherein a bottom surface (5341; 5341') of the front groove (534) is a plane surface (5341) or a concave curved surface (5341') toward an inner side of the lens (53).

14. The display device (1) of any one of claims 1 to 13, wherein the lens (53') extends in a direction in which the plurality of optical packages (51) are arranged, and covers the plurality of optical packages (51).

15. The display device (1) of any one of claims 1 to 14, further comprising a controller (C) which controls a brightness of the first light source (511a) and a brightness of the second light source (511b).

## Patentansprüche

1. Anzeigevorrichtung (1), umfassend:
ein Anzeigefeld (10); und
eine Hintergrundbeleuchtungseinheit, die Licht für das Anzeigefeld (10) bereitstellt,
wobei die Hintergrundbeleuchtungseinheit aufweist:
ein Substrat (40);
mehrere optischen Baugruppen (51), die auf dem Substrat (40) angeordnet sind; und
eine Linse (53), die mindestens eine der mehreren optischen Baugruppen (51) abdeckt,
wobei die optische Baugruppe (51) aufweist:
eine erste Lichtquelle (511a) auf dem Substrat (40);
eine zweite Lichtquelle (511b) benachbart zur ersten Lichtquelle (511a); und
eine Trennwand (513) zwischen der ersten Lichtquelle (511a) und der zweiten Lichtquelle (511b),
wobei die optische Baugruppe (51) so konfiguriert ist, dass:
in einem ersten Modus der optischen Baugruppe (51) sowohl die erste Lichtquelle (511a) als auch die zweite Lichtquelle (511b) eingeschaltet sind und eine Helligkeit der ersten Lichtquelle (511a) und eine Helligkeit der zweiten Lichtquelle (511b) gesteuert werden;
in einem zweiten Modus der optischen Baugruppe (51) die erste Lichtquelle (511a) eingeschaltet ist und eine Helligkeit der ersten Lichtquelle (511a) gesteuert wird, die zweite Lichtquelle (511b) jedoch nicht betrieben wird oder ausgeschaltet ist; und
in einem dritten Modus der optischen Baugruppe (51) die zweite Lichtquelle (511b) eingeschaltet ist, und eine Helligkeit der zweiten Lichtquelle (511b) gesteuert wird, während die erste Lichtquelle (511a) nicht betrieben wird oder ausgeschaltet ist.

2. Anzeigevorrichtung (1) nach Anspruch 1, wobei die optische Baugruppe (51) ferner aufweist:
eine Wand (512), die die erste und die zweite Lichtquelle (511a, 511b) umgibt, wobei die Wand (512) einen ersten Teil (512a) und einen zweiten Teil (512b) aufweist, die sich in Bezug auf die Trennwand (513) gegenüberliegen;
einen ersten Hohlraum (51Ca) zwischen dem ersten Teil (512a) und der Trennwand (513); und
einen zweiten Hohlraum (51Cb) zwischen der Trennwand (513) und dem zweiten Teil (512b),
wobei der erste Hohlraum (51Ca) aufweist:
einen ersten Subbereich (51Caa) zwischen dem ersten Teil (512a) und einer Mittelachse (Za) des ersten Hohlraums (51Ca); und
einen zweiten Subbereich (51Cab) zwischen der Mittelachse (Za) des ersten Hohlraums (51Ca) und der Trennwand (513),
wobei der zweite Hohlraum (51Cb) aufweist:
einen dritten Subbereich (51Cba) zwischen der Trennwand (513) und einer Mittelachse (Zb) des zweiten Hohlraums (51Cb); und
einen vierten Subbereich (51Cbb) zwischen der Mittelachse (Zb) des zweiten Hohlraums (51Cb) und dem zweiten Teil (512b),
wobei sich die erste Lichtquelle (511a) im zweiten Subbereich (51Cab) befindet und sich die zweite Lichtquelle (511b) im dritten Subbereich (51Cba) befindet.

3. Anzeigevorrichtung (1) nach Anspruch 1 oder 2, wobei eine Höhe der Trennwand (513), die aus dem Substrat (40) vorsteht, größer ist als eine Höhe der ersten und zweiten Lichtquellen (511a, 511b), die aus dem Substrat (40) vorstehen, und die erste und zweite Lichtquelle (511a, 511b) zur Trennwand (513) benachbart sind.

4. Anzeigevorrichtung (1) nach einem der Ansprüche 1 bis 3, wobei ein Raum vor der optischen Baugruppe (51) durch eine Mittelachse (Z3) der Trennwand (513) in einen ersten Raum (Va) vor der ersten Lichtquelle (511a) und einen zweiten Raum (Vb) vor der zweiten Lichtquelle (511b) unterteilt ist, und
wobei ein Anteil des Lichts der ersten Lichtquelle (511a) durch den zweiten Raum (Vb) geht.

5. Anzeigevorrichtung (1) nach Anspruch 4, wobei die Hintergrundbeleuchtungseinheit ferner eine Streuplatte (31) zwischen dem Anzeigefeld (10) und der Linse (53) aufweist, wobei die Streuplatte (31) aufweist:
einen ersten Lichtverteilungs-Abdeckungsbereich (Vaa), der dem ersten Raum (Va) entspricht und in dem ein Anteil des Lichts der ersten Lichtquelle (511a) ankommt; und
einen zweiten Lichtverteilungs-Abdeckungsbereich (Vab), der dem zweiten Raum (Vb) entspricht und in dem ein Anteil des Lichts der ersten Lichtquelle (511b) ankommt,
wobei das Verhältnis des zweiten Lichtverteilungs-Abdeckungsbereichs (Vab) zu den ersten und zweiten Lichtverteilungs-Abdeckungsbereichen (Vaa, Vab) 0,3 oder weniger beträgt.

6. Anzeigevorrichtung (1) nach Anspruch 1, wobei die optische Baugruppe (51) ferner aufweist:
eine Wand (512), die die erste und die zweite Lichtquelle (511a, 511b) umgibt;
einen ersten Hohlraum (51Ca), der zwischen einem ersten Teil (512a) der Wand (512) und der Trennwand (513) ausgebildet ist und in dem sich die erste Lichtquelle (511a) befindet;
einen zweiten Hohlraum (51Cb), der zwischen einem zweiten Teil (512b) der Wand (512) und der Trennwand (513) ausgebildet ist und in dem sich die zweite Lichtquelle (511b) befindet;
eine erste Verkapselung (514a), die in den ersten Hohlraum (51Ca) eingefüllt ist und die erste Lichtquelle (511a) abdeckt; und
eine zweite Verkapselung (514b), die in den zweiten Hohlraum (51Cb) eingefüllt ist und die zweite Lichtquelle (511b) abdeckt.

7. Anzeigevorrichtung (1) nach Anspruch 6, wobei die optische Baugruppe (51) ferner einen Leiterrahmen (510) aufweist, der elektrisch mit dem Substrat (40) verbunden ist und auf dem sich die erste und die zweite Lichtquelle (511a, 511b) befinden.

8. Anzeigevorrichtung (1) nach einem der Ansprüche 1 bis 7, wobei die optische Baugruppe (51) ferner mindestens eine Lichtquelle (511c) zusätzlich zu der ersten und der zweiten Lichtquelle (511a, 511b) aufweist,
wobei eine Helligkeit der ersten Lichtquelle (511a), eine Helligkeit der zweiten Lichtquelle (511b) und eine Helligkeit der mindestens einen Lichtquelle (511c) unabhängig voneinander gesteuert werden,
wobei die Linse (53) die erste und die zweite Lichtquelle (511a, 511b) und die mindestens eine Lichtquelle (511c) abdeckt.

9. Anzeigevorrichtung (1) nach einem der Ansprüche 1 bis 8, wobei bei einem spezifischen Strom eine Helligkeit der zweiten Lichtquelle (511b') größer ist als eine Helligkeit der ersten Lichtquelle (511a').

10. Anzeigevorrichtung (1) nach Anspruch 9, wobei die zweite Lichtquelle (511b') größer ist als die erste Lichtquelle (511a'), und die Helligkeit der zweiten Lichtquelle (511b') und die Helligkeit der ersten Lichtquelle (511a') unabhängig voneinander gesteuert werden.

11. Anzeigevorrichtung (1) nach einem der Ansprüche 1 bis 10, wobei die Linse (53) aufweist:
einen konvexen Kuppelteil (531);
eine hintere Nut (533), die von einer Rückseite des Kuppelteils (531) ausgespart ist und der optischen Baugruppe (51) zugewandt ist; und
eine vordere Nut (534), die von einer Vorderseite des Kuppelteils (531) ausgespart ist und gegenüber der hinteren Nut (533) angeordnet ist,
wobei sich eine Mittelachse (Z3) der Trennwand (513) in einer Richtung erstreckt, die sich mit der hinteren Nut (533) und der vorderen Nut (534) schneidet.

12. Anzeigevorrichtung (1) nach Anspruch 11, wobei eine Bodenfläche (5331; 5331') der hinteren Nut (533) eine konvex gekrümmte Fläche (5331) zur ersten und zweiten Lichtquelle der optischen Baugruppe oder eine ebene Fläche (5331') ist.

13. Anzeigevorrichtung (1) nach Anspruch 11 oder 12, wobei eine Bodenfläche (5341; 5341') der vorderen Nut (534) eine ebene Fläche (5341) oder eine konkav gekrümmte Fläche (5341') zur Innenseite der Linse (53) ist.

14. Anzeigevorrichtung (1) nach einem der Ansprüche 1 bis 13, wobei sich die Linse (53') in einer Richtung erstreckt, in der die mehreren optischen Baugruppen (51) angeordnet sind, und die mehreren optischen Baugruppen (51) abdeckt.

15. Anzeigevorrichtung (1) nach einem der Ansprüche 1 bis 14, die ferner eine Steuerung (C) aufweist, die eine Helligkeit der ersten Lichtquelle (511a) und eine Helligkeit der zweiten Lichtquelle (511b) steuert.

## Revendications

1. Dispositif d'affichage (1), comprenant :
un panneau d'affichage (10) ; et
une unité de rétroéclairage émettant de la lumière vers le panneau d'affichage (10),
où l'unité de rétroéclairage comprend :
un substrat (40) ;
une pluralité de boîtiers optiques (51) disposés sur le substrat (40) ; et
une lentille (53) recouvrant au moins un boîtier optique parmi la pluralité de boîtiers optiques (51),
où le boîtier optique (51) comprend :
une première source lumineuse (511a) sur le substrat (40) ;
une deuxième source lumineuse (511b) adjacente à la première source lumineuse (511a) ; et
une cloison de séparation (513) entre la première source lumineuse (511a) et la deuxième source lumineuse (511b),
où le boîtier optique (51) est prévu de telle sorte que :
dans un premier mode de fonctionnement du boîtier optique (51), la première source lumineuse (511a) et la deuxième source lumineuse (511b) sont toutes deux activées, et la luminosité de la première source lumineuse (511a) ainsi que celle de la deuxième source lumineuse (511b) sont régulées ;
dans un deuxième mode du boîtier optique (51), la première source lumineuse (511a) est activée, et la luminosité de la première source lumineuse (511a) est régulée, mais la deuxième source lumineuse (511b) n'est ni commandée ni désactivée ; et,
dans un troisième mode du boîtier optique (51), la deuxième source lumineuse (511b) est activée, et la luminosité de la deuxième source lumineuse (511b) est régulée, mais la première source lumineuse (511a) n'est ni commandée ni désactivée.

2. Dispositif d'affichage (1) selon la revendication 1, où le boîtier optique (51) comprend en outre :
une paroi (512) entourant la première et la deuxième sources lumineuses (511a, 511b), ladite paroi (512) comportant une première partie (512a) et une deuxième partie (512b) opposées l'une de l'autre par rapport à la cloison de séparation (513) ;
une première cavité (51Ca) entre la première partie (512a) et la cloison de séparation (513) ; et
une deuxième cavité (51Cb) entre la cloison de séparation (513) et la deuxième partie (512b),
où la première cavité (51Ca) comprend :
une première zone partielle (51Caa) disposée entre la première partie (512a) et un axe central (Za) de la première cavité (51Ca) ; et
une deuxième zone partielle (51Cab) disposée entre l'axe central (Za) de la première cavité (51Ca) et la cloison de séparation (513),
où la deuxième cavité (51Cb) comprend :
une troisième zone partielle (51Cba) disposée entre la cloison de séparation (513) et un axe central (Zb) de la deuxième cavité (51Cb) ; et
une quatrième zone partielle (51Cbb) disposée entre l'axe central (Zb) de la deuxième cavité (51Cb) et la deuxième partie (512b),
où la première source lumineuse (511a) est disposée dans la deuxième zone partielle (51Cab), et la deuxième source lumineuse (511b) est disposée dans la troisième zone partielle (51Cba).

3. Dispositif d'affichage (1) selon la revendication 1 ou la revendication 2, où la hauteur de la cloison de séparation (513) faisant saillie du substrat (40) est supérieure à la hauteur de la première et de la deuxième sources lumineuses (511a, 511b) faisant saillie du substrat (40), et où la première et la deuxième sources lumineuses (511a, 511b) sont adjacentes à la cloison de séparation (513).

4. Dispositif d'affichage (1) selon l'une des revendications 1 à 3, où un espace à l'avant du boîtier optique (51) est divisé par un axe central (Z3) de la cloison de séparation (513) en un premier espace (Va) disposé devant la première source lumineuse (511a) et un deuxième espace (Vb) disposé devant la deuxième source lumineuse (511b), et
où une partie de la lumière de la première source lumineuse (511a) traverse le deuxième espace (Vb).

5. Dispositif d'affichage (1) selon la revendication 4, où l'unité de rétroéclairage comprend en outre une plaque de diffusion (31) entre le panneau d'affichage (10) et la lentille (53), où la plaque de diffusion (31) comprend :
une première couverture de distribution de lumière (Vaa) correspondant au premier espace (Va), et sur laquelle est incidente une partie de la lumière de la première source lumineuse (511a) ; et
une deuxième couverture de distribution de lumière (Vab) correspondant au deuxième espace (Vb), et sur laquelle est incidente une partie de la lumière de la première source lumineuse (511b),
où le rapport entre la deuxième couverture de distribution de lumière (Vab) et la première et la deuxième couvertures de distribution de lumière (Vaa, Vab) est égal ou inférieur à 0,3.

6. Dispositif d'affichage (1) selon la revendication 1, où le boîtier optique (51) comprend en outre :
une paroi (512) entourant la première et la deuxième sources lumineuses (511a, 511b) ;
une première cavité (51Ca) formée entre une première partie (512a) de la paroi (512) et la cloison de séparation (513), et dans laquelle est disposée la première source lumineuse (511a) ;
une deuxième cavité (51Cb) formée entre une deuxième partie (512b) de la paroi (512) et la cloison de séparation (513), et dans laquelle est disposée la deuxième source lumineuse (511b) ;
une première encapsulation (514a) comblant la première cavité (51Ca) et recouvrant la première source lumineuse (511a) ; et
une deuxième encapsulation (514b) comblant la deuxième cavité (51Cb) et recouvrant la deuxième source lumineuse (511b).

7. Dispositif d'affichage (1) selon la revendication 6, où le boîtier optique (51) comprend en outre une grille de connexion (510) connectée électriquement au substrat (40), et sur laquelle sont disposées la première et la deuxième sources lumineuses (511a, 511b).

8. Dispositif d'affichage (1) selon l'une des revendications 1 à 7, où le boîtier optique (51) comprend en outre au moins une source lumineuse (511c) en plus de la première et de la deuxième sources lumineuses (511a, 511b),
où la luminosité de la première source lumineuse (511a), la luminosité de la deuxième source lumineuse (511b) et la luminosité de ladite au moins une source lumineuse (511c) sont régulées indépendamment,
où la lentille (53) recouvre la première et la deuxième sources lumineuses (511a, 511b) et ladite au moins une source lumineuse (511c).

9. Dispositif d'affichage (1) selon l'une des revendications 1 à 8, où, pour un courant spécifique, la luminosité de la deuxième source lumineuse (511b') est supérieure à celle de la première source lumineuse (511a').

10. Dispositif d'affichage (1) selon la revendication 9, où la luminosité de la deuxième source lumineuse (511b') est supérieure à celle de la première source lumineuse (511a'), et la luminosité de la deuxième source lumineuse (511b') et la luminosité de la première source lumineuse (511a') sont régulées indépendamment.

11. Dispositif d'affichage (1) selon l'une des revendications 1 à 10, où la lentille (53) comprend :
une partie en dôme convexe (531) ;
une rainure arrière (533) ménagée dans une surface arrière de la partie en dôme (531), et faisant face au boîtier optique (51) ; et
une rainure avant (534) ménagée dans une surface avant de la partie en dôme (531), et disposée à l'opposé de la rainure arrière (533),
où un axe central (Z3) de la cloison de séparation (513) s'étend dans une direction croisant la rainure arrière (533) et la rainure avant (534).

12. Dispositif d'affichage (1) selon la revendication 11, où une surface inférieure (5331 ; 5331') de la rainure arrière (533) est une surface courbe convexe (5331) dirigée vers la première et la deuxième sources lumineuses du boîtier optique, ou une surface plane (5331').

13. Dispositif d'affichage (1) selon la revendication 11 ou la revendication 12, où une surface inférieure (5341 ; 5341') de la rainure avant (534) est une surface plane (5341) ou une surface courbe concave (5341') dirigée vers un côté intérieur de la lentille (53).

14. Dispositif d'affichage (1) selon l'une des revendications 1 à 13, où la lentille (53') s'étend dans une direction d'agencement de la pluralité de boîtiers optiques (51), et recouvre la pluralité de boîtiers optiques (51).

15. Dispositif d'affichage (1) selon l'une des revendications 1 à 14, comprenant en outre un contrôleur (C) régulant la luminosité de la première source lumineuse (511a) et la luminosité de la deuxième source lumineuse (511b).
